# EUROPÄISCHE PATENTSCHRIFT

(11) **EP 2 834 603 B1**
(45) Veröffentlichungstag und Bekanntmachung des Hinweises auf die Patenterteilung: **21.07.2021**
(21) Anmeldenummer: 13711023.5
(22) Anmeldetag: 19.03.2013
(51) Int. Cl.: G01F 1/84

(54) **MEßWANDLER VOM VIBRATIONSTYP**
VIBRATION TYPE MEASURING TRANSDUCER
TRANSDUCTEUR DE MESURE DE TYPE VIBRATOIRE

(30) Priorität: 03.04.2012 WO PCT/EP2012/056102; 04.04.2012 DE 102012102947; 30.07.2012 DE 102012106930
(43) Veröffentlichungstag der Anmeldung: 11.02.2015
(73) Patentinhaber: Endress+Hauser Flowtec AG, 4153 Reinach (BL) (CH)
(72) Erfinder: RIEDER, Alfred, 84032 Landshut (DE); ZHU, Hao, 85354 Freising (DE); BITTO, Ennio, 4147 Aesch (BL) (CH); ECKERT, Gerhard, 79639 Grenzach-Wyhlen (DE)
(74) Vertreter: Andres, Angelika Maria
(86) Internationale Anmeldenummer: PCT/EP2013/055612
(87) Internationale Veröffentlichungsnummer: WO 2013/149817

(56) Entgegenhaltungen:
- WO-A1-2012/136671
- DE-A1-102009 055 069
- DE-A1-102011 006 971
- US-A- 4 781 069
- US-A- 5 370 002
- US-B1- 6 415 668
- None

## Beschreibung

Die Erfindung betrifft einen Meßwandler vom Vibrationstyp sowie ein Verfahren zum Einstellen wenigstens einer einer, insb. als Meßrohr eines solchen Meßwandlers dienenden, Rohranordnung immanenten Eigenfrequenz. Darüberhinaus betrifft die Erfindung auch ein mittels eines solchen Meßwandlers vom Vibrationstyp gebildetes Meßsystem.

In der industriellen Meßtechnik werden, insb. auch im Zusammenhang mit der Regelung und Überwachung von automatisierten verfahrenstechnischen Prozessen, zur Ermittlung von charakteristischen Meßgrößen von in einer Prozeßleitung, beispielsweise einer Rohrleitung, strömenden Medien, beispielsweise von Flüssigkeiten und/oder Gasen, oftmals solche Meßsysteme verwendet, die mittels eines Meßwandlers vom Vibrationstyp und einer daran angeschlossenen, zumeist in einem separaten Elektronik-Gehäuse untergebrachten, Umformer-Elektronik, im strömenden Medium Reaktionskräfte, beispielsweise Corioliskräfte, induzieren und von diesen abgeleitet wiederkehren die wenigstens eine Meßgröße, beispielsweise eine Massedurchflußrate, einer Dichte, einer Viskosität oder einem anderen Prozeßparameter, entsprechend repräsentierende Meßwerte erzeugen. Derartige - oftmals mittels eines In-Line-Meßgeräts in Kompaktbauweise mit integriertem Meßwandler, wie etwa einem Coriolis-Massedurchflußmesser, gebildete - Meßsysteme sind seit langem bekannt und haben sich im industriellen Einsatz bewährt. Beispiele für solche Meßsysteme mit einem Meßwandler vom Vibrationstyp oder auch einzelnen Komponenten davon, sind z.B. in der EP-A 763 720, der EP-A 462 711, der EP-A 421 812, der EP-A 1 248 084, der WO-A 98/40702, der WO-A 96/08697, der WO-A 2010/059157, der WO-A 2008/059015, der WO-A 2007/040468, der WO-A 2005/050145, der WO-A 2004/099735, der US-B 76 10 795, der US-B 75 62 585, der US-B 74 21 350, der US-B 73 92 709, der US-B 73 50 421, der US-B 73 25 461, der US-B 71 27 952, der US-B 68 83 387, der US-B 63 11 136, der US-A 60 92 429, der US-A 59 69 264, der US-A 59 26 096, der US-A 57 96 011, der US-A 57 34 112, der US-A 56 10 342, der US-A 56 02 345, der US-A 53 59 881, der US-A 50 50 439, der US-A 50 09 109, der US-A 48 79 911, der US-A 48 23 614, der US-A 48 01 897, der US-A 47 68 384, der US-A 47 38 144, der US-A 46 80 974, der US-A 2006/0283264, der US-A 2011/0265580, der US-A 2011/0167907, der US-A 2010/0251830, der US-A 2010/0242623, der US-A 2010/0050783, oder der eigenen, nicht vorveröffentlichten internationalen Patentanmeldung PCT/EP2012/056102 beschrieben.

Darin gezeigte Meßwandler umfassen wenigstens zwei in einem Meßwandler-Gehäuse untergebrachte baugleiche, im wesentlichen gerade oder gekrümmte, z.B. U-, oder V-förmige, Meßrohre zum Führen des - gegebenenfalls auch inhomogenen, extrem heißen oder auch sehr zähen - Mediums. Die wenigstens zwei Meßrohre können, wie beispielsweise in der erwähnten US-A 57 34 112, US-A 57 96 011 oder der US-A 2010/0242623 gezeigt, unter Bildung einer Rohranordnung mit zueinander parallel geschalteten Strömungspfaden über ein sich zwischen den Meßrohren und einem einlaßseitigen Anschlußflansch erstreckenden einlaßseitig Strömungsteiler sowie über ein sich zwischen den Meßrohren und einem auslaßseitigen Anschlußflansch erstreckenden auslaßseitig Strömungsteiler in die Prozeßleitung eingebunden sein. Die Meßrohre können aber auch, wie beispielsweise in der erwähnten EP-A 421 812, der EP-A 462 711, der EP-A 763 720 gezeigt, unter Bildung einer Rohranordnung mit einem einzigen durchgehenden Strömungspfad via Ein- und Auslaßrohrstück in die Prozeßleitung eingebunden sein. Im Meßbetrieb werden die dann - parallel bzw. seriell - durchströmten Meßrohre zwecks Generierung von durch das hindurchströmende Medium mit beeinflußten Schwingungsformen vibrieren gelassen.

Als angeregte Schwingungsform - dem sogenannten Nutzmode - wird bei Meßwandlern mit gekrümmten Meßrohren üblicherweise jene Eigenschwingungsform (Eigenmode) gewählt, bei denen jedes der Meßrohre zumindest anteilig bei einer natürlichen Resonanzfrequenz (Eigenfrequenz) um eine gedachte Längsachse des Meßwandlers nach Art eines an einem Ende eingespannten Auslegers pendelt, wodurch im hindurchströmenden Medium vom Massendurchfluß abhängige Corioliskräfte induziert werden. Diese wiederum führen dazu, daß den angeregten Schwingungen des Nutzmodes, im Falle gekrümmter Meßrohre also pendelartigen Auslegerschwingungen, dazu gleichfrequente Biegeschwingungen gemäß wenigstens einer ebenfalls natürlichen zweiten Schwingungsform von im Vergleich zum Nutzmode höherer (modaler) Ordnung, dem sogenannten Coriolismode, überlagert werden. Bei Meßwandlern mit gekrümmtem Meßrohr entsprechen diese durch Corioliskräfte erzwungenen Auslegerschwingungen im Coriolismode üblicherweise jener Eigenschwingungsform, bei denen das Meßrohr auch Drehschwingungen um eine senkrecht zur Längsachse ausgerichtete gedachte Hochachse ausführt. Bei Meßwandlern mit geradem Meßrohr hingegen wird zwecks Erzeugung von massendurchflußabhängigen Corioliskräften oftmals ein solcher Nutzmode gewählt, bei dem jedes der Meßrohre zumindest anteilig Biegeschwingungen im wesentlichen in einer einzigen gedachten Schwingungsebene ausführt, so daß die Schwingungen im Coriolismode dementsprechend als zu den Nutzmodeschwingungen komplanare Biegeschwingungen gleicher Schwingfrequenz ausgebildet sind.

Zum aktiven Erregen von Schwingungen der wenigstens zwei Meßrohre weisen Meßwandler vom Vibrationstyp des weiteren eine im Betrieb von einem von der erwähnten Umformer-Elektronik bzw. einer darin entsprechend vorgesehenen, speziellen Treiberschaltung generierten und entsprechend konditionierten elektrischen Treibersignal, z.B. einem geregelten Strom, angesteuerte Erregeranordnung auf, die das Meßrohr mittels wenigstens eines im Betrieb von einem Strom durchflossenen, auf die wenigstens zwei Meßrohre praktisch direkt, insb. differentiell, einwirkenden elektro-mechanischen, insb. elektro-dynamischen, Schwingungserregers zu, insb. gegengleichen, Biegeschwingungen im Nutzmode anregt. Desweiteren umfassen derartige Meßwandler eine Sensoranordnung mit, insb. elektro-dynamischen, Schwingungssensoren zum zumindest punktuellen Erfassen einlaßseitiger und auslaßseitiger Schwingungen wenigstens eines der Meßrohre, insb. gegengleichen Biegeschwingungen der Meßrohre im Coriolismode, und zum Erzeugen von vom zu erfassenden Prozeßparameter, wie etwa dem Massedurchfluß oder der Dichte, beeinflußten, als Vibrationssignale des Meßwandlers dienenden elektrischen Sensorsignalen. Wie beispielsweise in der US-B 73 25 461 beschrieben können bei Meßwandlern der in Rede stehenden Art gegebenenfalls auch der Schwingungserreger zumindest zeitweise als Schwingungssensor und/oder ein Schwingungssensor zumindest zeitweise als Schwingungserreger verwendet werden. Die Erregeranordnung von Meßwandlern der in Rede stehenden Art weist üblicherweise wenigstens einen elektrodynamischen und/oder differentiell auf die Meßrohre einwirkenden Schwingungserreger auf, während die Sensoranordnung einen einlaßseitigen, zumeist ebenfalls elektrodynamischen, Schwingungssensor sowie wenigstens einen dazu im wesentlichen baugleichen auslaßseitigen Schwingungssensor umfaßt. Solche elektrodynamischen und/oder differentiellen Schwingungserreger marktgängiger Meßwandler vom Vibrationstyp sind mittels einer zumindest zeitweise von einem Strom durchflossenen an einem der Meßrohre fixierten Magnetspule sowie einen mit der wenigstens einen Magnetspule wechselwirkenden, insb. in diese eintauchenden, als Anker dienenden eher länglichen, insb. stabförmig ausgebildeten, Dauermagneten gebildet, der entsprechend am anderen, gegengleich zu bewegenden Meßrohr fixiert ist. Der Dauermagnet und die als Erregerspule dienende Magnetspule sind dabei üblicherweise so ausgerichtet, daß sie zueinander im wesentlichen koaxial verlaufen. Zudem ist bei herkömmlichen Meßwandlern die Erregeranordnung üblicherweise derart ausgebildet und im Meßwandler plazierte, daß sie jeweils im wesentlichen mittig an die Meßrohre angreift. Dabei ist der Schwingungserreger und insoweit die Erregeranordnung, wie beispielsweise auch bei den in der vorgeschlagenen Meßwandlern gezeigt, zumindest punktuell entlang einer gedachten mittigen Umfangslinie des jeweiligen Meßrohrs außen an diesem fixiert. Alternativ zu einer mittels eher zentral und direkt auf die jeweiligen Meßrohr wirkenden Schwingungserregern gebildeten Erregeranordnung können, wie u.a. in der US-A 60 92 429 oder der US-A 48 23 614 vorgeschlagen, beispielsweise auch mittels zweier, jeweils nicht im Zentrum des jeweiligen Meßrohrs, sondern eher ein- bzw. auslaßseitig an diesem fixierten Schwingungserreger gebildete Erregeranordnungen verwendet werden.

Bei den meisten marktgängigen Meßwandlern vom Vibrationstyp sind die Schwingungssensoren der Sensoranordnung zumindest insoweit im wesentlichen baugleich ausgebildet wie der wenigstens eine Schwingungserreger, als sie nach dem gleichen Wirkprinzip arbeiten. Dementsprechend sind auch die Schwingungssensoren einer solchen Sensoranordnung zumeist jeweils mittels wenigstens einer an einem der Meßrohre fixierten, zumindest zeitweise von einem veränderlichen Magnetfeld durchsetzte und damit einhergehend zumindest zeitweise mit einer induzierten Meßspannung beaufschlagten sowie einem an einem anderen der Meßrohre fixierten, mit der wenigstens eine Spule zusammenwirkenden dauermagnetischen Anker gebildet, der das Magnetfeld liefert. Jede der vorgenannten Spulen ist zudem mittels wenigstens eines Paars elektrischer Anschlußleitungen mit der erwähnten Umformer-Elektronik des In-Line-Meßgeräts verbunden, die zumeist auf möglichst kurzem Wege von den Spulen hin zum Meßwandler-Gehäuse geführt sind. Aufgrund der Überlagerung von Nutz- und Coriolismode weisen die mittels der Sensoranordnung einlaßseitig und auslaßseitig erfaßten Schwingungen der vibrierenden Meßrohre eine auch vom Massedurchfluß abhängige, meßbare Phasendifferenz auf. Üblicherweise werden die Meßrohre derartiger, z.B. in Coriolis-Massedurchflußmessern eingesetzte, Meßwandler im Betrieb auf einer momentanen natürlichen Resonanzfrequenz der für den Nutzmode gewählten Schwingungsform, z.B. bei konstantgeregelter Schwingungsamplitude, angeregt. Da diese Resonanzfrequenz im besonderen auch von der momentanen Dichte des Mediums abhängig ist, kann mittels marktüblicher Coriolis-Massedurchflußmesser neben dem Massedurchfluß zusätzlich auch die Dichte von strömenden Medien gemessen werden. Ferner ist es auch möglich, wie beispielsweise in der US-B 66 51 513 oder der US-B 70 80 564 gezeigt, mittels Meßwandlern vom Vibrationstyp, Viskosität des hindurchströmenden Mediums direkt zu messen, beispielsweise basierend auf einer für die Aufrechterhaltung der Schwingungen erforderlichen Erregerenergie bzw. Erregerleistung und/oder basierend auf einer aus einer Dissipation von Schwingungsenergie resultierenden Dämpfung von Schwingungen des wenigstens einen Meßrohrs, insb. denen im vorgenannten Nutzmode. Darüberhinaus können auch weitere, aus den vorgenannten primären Meßwerten Massendurchflußrate, Dichte und Viskosität abgeleitete Meßgrößen, wie etwa gemäß der US-B 65 13 393 die Reynoldszahl zu ermittelt werden.

Bei Meßwandlern der in Rede stehenden Art ist es von besonderer Bedeutung, die Schwingungseigenschaften von einzelnen Meßwandler-Komponenten, nicht zuletzt auch des wenigstens einen Meßrohrs, mithin die nämliche Schwingungseigenschaften charakterisierenden bzw. beeinflussenden Parameter, wie etwa Rohrformen bzw. -querschnitte, Rohrwandstärken und damit einhergehend Masseverteilungen, Biegesteifigkeiten, Eigenfrequenzen etc., jedes einzelnen Meßwandler-Exemplars möglichst exakt auf ein dafür jeweils nominelles, nämlich für definierte Referenzbedingungen vorgegebenes, Ziel-Maß zu trimmen bzw. die Streuung nämlicher Parameter innerhalb einer Population produzierter Meßwandler derselben Art in einem dafür vorgegebenen, möglichst engen Toleranzbereich zu halten. Gleichermaßen wichtig ist bei Meßwandlern der in Rede stehenden Art allfällige Imbalancen der jeweiligen Rohranordnung, hervorgerufen etwa durch ungleichförmige, mithin nicht symmetrische Massen- und/oder Steifigkeitsverteilungen innerhalb der Rohranordnung, zu vermeiden bzw. entsprechend zu minimieren.

Hierbei ist es u.a. auch von besonderem Interesse, zu einer möglichst "späten" Produktionsphase die Eigenfrequenzen der jeweiligen Rohranordnung des Meßwandlers auf das angestrebte Ziel-Maß, hier also eine oder mehrere ausgewählte Ziel-Eigenfrequenzen, einzustellen, bzw. allfällige Imbalancen entsprechend zu kompensieren, um allfällige neuerliche Verstimmungen der Rohranordnung in einer nachfolgenden Produktionsphase des Meßwandlers verläßlich vermeiden zu können.

In der eingangs erwähnten US-A 56 10 342 ist beispielsweise ein Verfahren zum dynamischen Abgleichen eines als Meßrohr eines Meßwandlers vom Vibrationstyp dienenden Rohrs auf eine Ziel-Steifigkeit gezeigt, bei welchem Verfahren das Rohr an seinen beiden Rohrenden in jeweils eine Bohrung eines ersten bzw. zweiten Endstücks eines Trägerrohrs durch gezieltes plastisches Verformen der Rohrwände im Bereich der Rohrenden eingepreßt und dabei zugleich auch die gesamte Rohranordnung auf eine Ziel-Eigenfrequenz adjustiert wird. Ferner ist in der eingangs erwähnten US-B 76 10 795 ein Verfahren zum Abgleichen eines als Meßrohr eines Meßwandlers vom Vibrationstyp dienenden Rohrs auf eine Ziel-Eigenfrequenz, mithin auf eine von der Rohrgeometrie und -querschnitt mitbestimmte Ziel-Biegesteifigkeit, mittels eines darin eingeleiteten und mit einem plastische Verformungen zumindest eines Teils von dessen Rohrwand herbeiführenden (Über-) Druck beaufschlagten Fluids beschrieben.

Die DE 10 2009 055069 A1 offenbart einen Meßwandler mit Koppelelementen, die Längsschlitze aufweisen. Die Dokumente US 4 781 069 A, US 5 370 002 A und US 6 415 668 B1) offenbaren weitere Varianten von Koppelelementen, die aber allesamt ohne weitere Anpassungen nicht trimmbar sind.

Ein Nachteil bei den aus dem Stand der Technik bekannten Verfahren besteht u.a. darin, daß sie sehr aufwendig sind. Darüberhinaus ist ein weitere Nachteil der vorgenannten Verfahren darin zusehen, daß prinzipbedingt damit schlußendlich eine gewisse Änderung der Geometrie der Rohre, nämlich eine Abweichung von der idealen Kreisform des Querschnitts bzw. eine erhöhte Abweichung von der perfekten Homogenität des Querschnitts in Längsrichtung, mithin eine Abweichung der Kontur des Lumens des Rohrs von der Idealform herbeigeführt wird.

Eine Aufgabe der Erfindung besteht daher darin, ein Verfahren - bzw. einen zur Durchführung eines solchen Verfahrens geeigneten Meßwandler - anzugeben, anzugeben, das einen präzisen gleichwohl einfachen Abgleich einer mittels wenigstens zweier Rohre - schlußendlich als Innenteil von Meßwandlern der eingangs genannten Art dienenden - Rohranordnung auf eine Ziel-Eigenfrequenz auch in einer Phase des Herstellungsprozesses für einen solche Rohranordnung, mithin auch von Meßwandlern vom Vibrationtyp ermöglicht, in der bereits die jeweilige Rohranordnung hergestellt, ggf. auch bereits mit Schwingungserreger- und/oder Schwingungssensor-Komponenten bestückt ist. Dies möglichst auch unter Vermeidung einer nachträglichen dauerhaften Deformation auch nur eines der Rohre der Rohranordnung. Ferner besteht eine Aufgabe der Erfindung auch darin, einen Meßwandler vom Vibrationstyp anzugeben, bei dem Imbalance der vorgenannten Art vorab weitgehend vermieden bzw. ggf. auch zu einer späten Produktionsphase einfach minimiert bzw. auskompensiert werden können.

Zur Lösung der Aufgabe besteht die Erfindung in einem dem Erzeugen von mit Parametern eines strömenden Mediums, beispielsweise einer Massendurchflußrate, einer Dichte und/oder einer Viskosität, korrespondierenden Vibrationssignalen dienenden Meßwandler vom Vibrationstyp welcher Meßwandler ein Meßwandlergehäuse mit einem ersten Gehäuseende und mit einem zweiten Gehäuseende sowie eine sich innerhalb des Meßwandlergehäuse von dessen ersten Gehäuseende bis zu dessen zweiten Gehäuseende erstreckende, mittels wenigstens zweier, beispielsweise baugleicher und/oder zueinander parallel verlaufender, Rohre gebildete Rohranordnung, von denen zumindest rein erstes Rohr als ein dem Führen von strömendem Medium dienendes Meßrohr ausgebildet ist, und von denen ein zweites Rohr unter Bildung einer einlaßseitigen ersten Kopplungszone mittels eines, beispielsweise plattenförmigen, ersten Kopplerelements und unter Bildung einer auslaßseitigen zweiten Kopplungszone mittels eines, beispielsweise plattenförmigen, zweiten Kopplerelements mit dem ersten Rohr mechanisch verbunden ist, umfaßt. Das erste Kopplerelement ist in einem sich zwischen dem ersten und zweiten Rohr erstreckenden Bereich ein wenigstens ein geschlossenes Ende aufweisenden, beispielsweise als ein Langloch oder als ein einseitig offener gerader Längsschlitz ausgebildeten, Schlitz mit einer maximalen Schlitzbreite und einer maximalen Schlitzlänge, die größer als die maximalen Schlitzbreite ist, sowie ein anteilig innerhalb des Schlitzes, beispielsweise in vom geschlossenen Ende des Schlitzes beabstandet, plaziertes, beispielsweise mittels einer Schraube und wenigstens einer darauf sitzenden Mutter gebildetes und/oder wiederlösbares und/oder starres, Verbindungselement umfaßt, das einen nämlichen Schlitz einfassenden Schlitzrand kontaktiert, derart, daß das Verbindungselement einander gegenüberliegende und/oder vom geschlossenen Ende beabstandete Randbereiche des Schlitzrandes unter Bildung einer Fixationszone, innerhalb der Relativbewegungen nämlicher Randbereiche verhindert sind, miteinander mechanisch koppelt, indem das Verbindungselement an nämlichen einander gegenüberliegende Randbereiche fixiert ist.

Ferner besteht die Erfindung in einem mittels eines solchen Meßwandlers gebildetem Meßsystem für ein einer Rohrleitung strömendes Medium, beispielsweise einer wäßrigen Flüssigkeit, einem Schlamm, einer Paste oder einem anderen fließfähigem Material, welches, beispielsweise als Kompakt-Meßgerät und/oder als Coriolis-Massendurchfluß-Meßgerät ausgebildete, Meßsystem eine mit dem - im Betrieb vom Medium durchströmten - Meßwandler elektrisch gekoppelte Umformer-Elektronik zum Ansteuern des Meßwandlers und zum Auswerten von vom Meßwandler gelieferten Vibrationssignalen umfaßt.

Darüberhinaus besteht die Erfindung auch in einem Verfahren zum Einstellen wenigstens einer einer mittels wenigstens zweier, beispielsweise aus Metall bestehenden und/oder als Meßrohr eines erfindungsgemäßen Meßwandlers vom Vibrationstyp dienenden, Rohren gebildeten Rohranordnung immanenten Eigenfrequenz, beispielsweise zum Ändern einer nämlicher Rohranordnung lediglich vorläufig innewohnenden Interim-Eigenfrequenz und/oder zum Abgleichen nämlicher Interim-Eigenfrequenz auf eine davon abweichende Ziel-Eigenfrequenz, von welchen wenigstens zwei Rohren zumindest ein erstes Rohr als ein dem Führen von strömendem Medium dienendes Meßrohr ausgebildet ist, und von welchen wenigstens zwei Rohren ein zweites Rohr unter Bildung einer einlaßseitigen ersten Kopplungszone mittels eines, beispielsweise plattenförmigen, ersten Kopplerelements und unter Bildung einer auslaßseitigen zweiten Kopplungszone mittels eines, beispielsweise plattenförmigen, zweiten Kopplerelements mit dem ersten Rohr mechanisch verbunden ist, bei welchem Meßwandler das erste Kopplerelement, insb. zum Einstellen wenigstens einer der Rohranordnung immanenten Eigenfrequenz, in einem sich zwischen dem ersten und zweiten Rohr erstreckenden Bereich wenigstens einen ein geschlossenes Ende aufweisenden, beispielsweise als ein Langloch oder als ein einseitig offener gerader Längsschlitz ausgebildeten, Schlitz mit einer maximalen Schlitzbreite und einer maximalen Schlitzlänge, die größer als die maximalen Schlitzbreite ist, umfaßt. Beim erfindungsgemäßen Verfahren wird ein anteilig innerhalb des Schlitzes plaziertes, beispielsweise mittels einer Schraube und wenigstens einer darauf aufgeschraubten Mutter gebildetes und/oder zunächst innerhalb des Schlitzes verschiebbares, Verbindungselements, derart fixiert, daß nämliches Verbindungselement, beispielsweise vom geschlossenen Ende des Schlitzes beabstandet, einen den Schlitz einfassenden Schlitzrand kontaktiert, und daß nämliches Verbindungselement einander gegenüberliegende Randbereiche des Schlitzrandes unter Bildung einer Fixationszone, innerhalb der Relativbewegungen nämlicher Randbereiche verhindert sind, beispielsweise starr, miteinander mechanisch koppelt, beispielsweise indem die Randbereiche im Verbindungselement eingeklemmt sind.

Nach einer ersten Ausgestaltung des Meßwandlers der Erfindung ist ferner vorgesehen, daß einander gegenüberliegende, vom wenigstens einen geschlossenen Ende des Schlitzes beabstandete Randbereiche des Schlitzrandes des Schlitzes mittels des Verbindungselements unter Bildung einer Fixationszone des ersten Kopplerelements, innerhalb der Relativbewegungen nämlicher Randbereiche verhindert sind, beispielsweise starr, miteinander mechanisch koppelt sind. Diese Ausgestaltung der Erfindung ist ferner vorgesehen, daß die Fixationszone gebildet ist, indem das Verbindungselement an den einander gegenüberliegende Randbereichen des Schlitzrandes, beispielsweise wiederlösbar, fixiert ist.

Nach einer zweiten Ausgestaltung des Meßwandlers der Erfindung ist ferner vorgesehen, daß die Fixationszone gebildet ist, indem die einander gegenüberliegende Randbereiche des Schlitzrandes im Verbindungselement eingeklemmt sind.

Nach einer dritten Ausgestaltung des Meßwandlers der Erfindung ist ferner vorgesehen, daß das erste Kopplerelement gleichweit vom ersten Gehäuseende des Meßwandlergehäuses entfernt angeordnet ist, wie das zweite Kopplerelement vom zweiten Gehäuseende des Meßwandlergehäuses.

Nach einer vierten Ausgestaltung des Meßwandlers der Erfindung ist ferner vorgesehen, daß das erste Rohr parallel zum zweiten Rohr verläuft und/oder daß das erste Rohr und das zweite Rohr hinsichtlich Form und Material baugleich sind.

Nach einer fünften Ausgestaltung des Meßwandlers der Erfindung ist ferner vorgesehen, daß jedes der Rohre jeweils, beispielsweise U-förmig oder V-förmig, gekrümmt ist.

Nach einer sechsten Ausgestaltung des Meßwandlers der Erfindung ist ferner vorgesehen, daß jedes der Rohre jeweils gerade ist.

Nach einer siebenten Ausgestaltung des Meßwandlers der Erfindung ist ferner vorgesehen, daß auch das zweite Rohr als ein dem Führen von strömendem Medium dienendes Meßrohr ausgebildet ist.

Nach einer achten Ausgestaltung des Meßwandlers der Erfindung ist ferner vorgesehen, daß das zweite Kopplerelement in einem sich zwischen dem ersten und zweiten Rohr erstreckenden Bereich ein wenigstens ein geschlossenes Ende aufweisenden, beispielsweise als ein Langloch oder als ein einseitig offener gerader Längsschlitz ausgebildeten und/oder zum Schlitz des ersten Kopplerelements identischen, Schlitz sowie ein anteilig innerhalb des Schlitzes, beispielsweise in vom geschlossenen Ende des Schlitzes beabstandet, plaziertes, beispielsweise mittels einer Schraube und wenigstens einer darauf sitzenden Mutter gebildetes und/oder wiederlösbares und/oder zum Verbindungselement des ersten Kopplerelements baugleiches, Verbindungselement umfaßt, das einen nämlichen Schlitz fassenden Schlitzrand kontaktiert, beispielsweise derart, daß das Verbindungselement einander gegenüberliegende Randbereiche des Schlitzrandes unter Bildung einer Fixationszone, innerhalb der Relativbewegungen nämlicher Randbereiche verhindert sind, beispielsweise starr, miteinander mechanisch koppelt.

Nach einer neunten Ausgestaltung des Meßwandlers der Erfindung ist ferner vorgesehen, daß das Verbindungselement wenigstens eine anteilig im Schlitz plazierte, beispielsweise als Kopfschraube oder als Schraubenbolzen ausgebildete, Schraube mit einem ein Außengewinde aufweisenden Schraubenschaft sowie wenigstens eine, beispielsweise jeden der beiden Randbereiche des Schlitzes kontaktierende und/oder selbstsichernde, Mutter mit einem mit nämlichem Außengewinde in Eingriff stehenden Innengewinde umfaßt. Diese Ausgestaltung der Erfindung weiterbildend ist ferner vorgesehen, daß die Fixationszone gebildet ist, indem die einander gegenüberliegende Randbereiche des Schlitzrandes im Verbindungselement eingeklemmt sind, wobei die, beispielsweise als Sperrzahnschraube ausgebildete, Schraube des Verbindungselements an einem Ende des Schraubenschaftes einen Schraubenkopf aufweist, und wobei jeder der gegenüberliegenden Randbereiche des Schlitzrandes innerhalb der Fixationszone jeweils zwischen Schraubenkopf und Mutter eingeklemmt ist, ggf. auch unter Zwischenlage wenigstens einer die Randbereiche kontaktierenden Unterlegscheibe. Alternativ oder in Ergänzung kann das Verbindungselement eine, beispielsweise jeden der beiden Randbereiche des Schlitzes kontaktierende, zweite Mutter mit einem mit dem Außengewinde in Eingriff stehenden Innengewinde umfassen, und kann die Fixationszone dadurch gebildet sein, daß die einander gegenüberliegende Randbereiche des Schlitzrandes im Verbindungselement, nämlich jeweils zwischen beiden Muttern, eingeklemmt sind, ggf. auch unter Zwischenlage wenigstens einer die Randbereiche kontaktierenden Unterlegscheibe. Die wenigstens eine Mutter des Verbindungselements kann beispielsweise jeweils auch als Sperrzahnmutter oder auch als Sicherungsmutter ausgebildet sein und/oder mittels wenigstens einer Kontermutter gesichert sein.

Nach einer ersten Weiterbildung des Meßwandlers der Erfindung umfaßt dieser weiters eine mit der Rohranordnung mechanisch gekoppelte, beispielsweise am ersten und zweiten Rohr angebrachte, elektromechanische Erregeranordnung zum Bewirken von Vibrationen, beispielsweise gegengleichen Biegeschwingungen, der wenigstens zwei Rohre, beispielsweise derart, daß das erste Rohr zumindest anteilig Biegeschwingungen um eine erste gedachte Biegeschwingungsachse der Rohranordnung und das zweite Rohr zumindest anteilig Biegeschwingungen um eine zur ersten gedachten Biegeschwingungsachse parallele zweite gedachte Biegeschwingungsachse der Rohranordnung ausführen.

Nach einer zweiten Weiterbildung des Meßwandlers der Erfindung umfaßt dieser weiters eine Sensoranordnung zum Erfassen von Vibrationen, beispielsweise Biegeschwingungen, wenigstens eines der Rohre und zum Erzeugen wenigstens eines nämliche Vibrationen repräsentierenden Vibrationssignals.

Nach einer dritten Weiterbildung des Meßwandlers der Erfindung umfaßt dieser weiters einen einlaßseitigen ersten Strömungsteiler mit wenigstens zwei voneinander beabstandeten Strömungsöffnungen, sowie einen auslaßseitigen zweiten Strömungsteiler mit wenigsten zwei voneinander beabstandeten Strömungsöffnungen. Ferner sind hierbei die wenigstens zwei Rohre unter Bildung einer Rohranordnung mit zumindest zwei strömungstechnisch parallel geschalteten Strömungspfaden an die, beispielsweise auch baugleichen, Strömungsteiler angeschlossen sind, nämlich derart, daß das erste Rohr mit einem einlaßseitigen ersten Rohrende in eine erste Strömungsöffnung des ersten Strömungsteilers und mit einem auslaßseitigen zweiten Rohrende in eine erste Strömungsöffnung des zweiten Strömungsteilers und daß das zweite Rohr mit einem einlaßseitigen ersten Rohrende in eine zweite Strömungsöffnung des ersten Strömungsteilers und mit einem auslaßseitigen zweiten Rohrende in eine zweite Strömungsöffnung des zweiten Strömungsteilers münden. Hierbei können beispielsweise auch das erste Gehäuseende des Meßwandlergehäuses mittels eines ersten Strömungsteilers und das zweite Gehäuseende des Meßwandlergehäuses mittels eines zweiten Strömungsteilers gebildete sein.
wobei das erste Gehäuseende des Meßwandlergehäuses mittels eines ersten Strömungsteilers und das zweite Gehäuseende des Meßwandlergehäuses mittels eines zweiten Strömungsteilers gebildete sind.

Nach einer Ausgestaltung des Verfahrens der Erfindung ist das Verbindungselement wenigstens eine anteilig im Schlitz plazierte, beispielsweise als Kopfschraube oder als Schraubenbolzen ausgebildete, Schraube mit einem ein Außengewinde aufweisenden Schraubenschaft sowie wenigstens eine, beispielsweise jeden der beiden Randbereiche des Schlitzes kontaktierende und/oder wieder lösbare, Mutter mit einem mit nämlichem Außengewinde in Eingriff stehenden Innengewinde umfaßt, bei welchem Verfahren zum Fixieren des Verbindungselements nämliche Schraube und die wenigstens eine Mutter relativ zueinander um eine gedachte Schraubenachse verdreht werden. Diese Ausgestaltung der Erfindung weiterbildend ist ferner vorgesehen, daß die Schraube des Verbindungselements an einem Ende des Schraubenschaftes einen Schraubenkopf aufweist, und daß zur Bildung der Fixationszone jeder der gegenüberliegenden Randbereiche des Schlitzrandes innerhalb der Fixationszone jeweils zwischen Schraubenkopf und Mutter eingeklemmt wird. Alternativ oder in Ergänzung dazu kann das Verbindungselement mittels wenigstens zweier Muttern, von denen jede ein mit dem Außengewinde des Schraubenschaftes in Eingriff stehenden Innengewinde aufweist, gebildet sein und kann zur Bildung der Fixationszone jeder der gegenüberliegenden Randbereiche des Schlitzrandes innerhalb der Fixationszone jeweils zwischen beiden Muttern eingeklemmt werden.

Nach einer ersten Weiterbildung des Verfahrens der Erfindung umfaßt dieses weiters einen Schritt des Ermittelns einer Interim-Eigenfrequenz der Rohranordnung, nämlich einer von einer für die Rohranordnung vorgegebenen bzw. einzustellenden Ziel-Eigenfrequenz abweichenden Eigenfrequenz, beispielsweise nach dem Fixieren des Verbindungselements und/oder basierend auf wenigstens einer bei vibrieren gelassenem Rohr gemessenen mechanischen momentanen Eigenfrequenz der Rohranordnung.

Nach einer zweiten Weiterbildung des Verfahrens der Erfindung umfaßt dieses weiters einen Schritt des Ermittelns, inwieweit die Interim-Eigenfrequenz der Rohranordnung von der für die Rohranordnung vorgegebenen bzw. einzustellenden Ziel-Eigenfrequenz abweicht, beispielsweise basierend auf wenigstens einer bei vibrieren gelassenem Rohr gemessenen mechanischen momentanen Eigenfrequenz der Rohranordnung.

Nach einer dritten Weiterbildung des Verfahrens der Erfindung umfaßt dieses weiters einen Schritt des Positionierens des Verbindungselements in einem solchen Bereich des Schlitzes, der zur Bildung einer die Ziel-Eigenfrequenz einstellenden Fixationszone geeignet ist.

Nach einer vierten Weiterbildung des Verfahrens der Erfindung umfaßt dieses weiters einen Schritt des Lösens des Verbindungselements, derart, daß nämliches Verbindungselement hernach relativ zum Schlitz bewegbar ist.

Nach einer fünften Weiterbildung des Verfahrens der Erfindung umfaßt dieses weiters einen Schritt des Prüfens, ob die Rohranordnung auf eine dafür vorgegebene Ziel-Eigenfrequenz getrimmt ist, beispielsweise basierend auf wenigstens einer bei vibrieren gelassenem Rohr gemessenen momentanen mechanischen Eigenfrequenz der Rohranordnung.

Nach einer sechsten Weiterbildung des Verfahrens der Erfindung umfaßt dieses weiters einen Schritt des Vibrierenlassens wenigstens eines der Rohre zum Ermitteln der Interim-Eigenfrequenz.

Ein Grundgedanke der Erfindung besteht darin, eine oder mehrere Eigenfrequenzen einer, insb. als Komponente eines Meßwandlers vom Vibrationstyp dienenden, Rohranordnung dadurch sehr einfach, gleichwohl sehr effektiv jeweils auf ein entsprechendes, nämlich gewünschtes Ziel-Maß dafür, mithin eine jeweilige Ziel-Eigenfrequenz, zu trimmen, indem mittels eines innerhalb eines im Kopplerelement vorgesehenen Schlitzes und eines darin plazierten Verbindungselements eine eine Biegesteifigkeit des Kopplerelments mitbestimmende Fixationszone gebildet wird und das - nachdem das Kopplerelement an den jeweiligen Rohren angebracht worden ist - eine endgültige Posistion des - zunächst innerhalb des Schlitzes verschiebbaren - Verbindungselements, mithin eine Postion der Fixationszone so gewählt ist, daß im Ergebnis eine Biegesteifigkeit des Kopplerelements, mithin eine (Gesamt-)Biegesteifigkeit der Rohranordnung, sowwie die davon mitbestimmten Eigenfrequenzen der Rohranordnung entsprechend den gewünschten Ziel-Maßen justiert sind. Ein Vorteil der Erfindung ist u.a. darin zu sehen, daß Eigenfrequenzen der so gebildeten Rohranordnung auch in einer vergleichsweise "späten" Produktionsphase sehr präzise auf das gewünschte Ziel-Maß gebracht werden können, in der dann ein neuerliches undefiniertes Verstimmen der Rohranordnung, mithin des Meßwandlers nicht mehr zu besorgen ist.

Die Erfindung sowie weitere vorteilhafte Ausgestaltungen und Zweckmäßigkeiten davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich.

Im einzelnen zeigen:
- Fig. 1, 2a, 2b: ein als Kompakt-Meßgerät ausgebildetes Meßsystem für in Rohrleitungen strömende Medien in verschiedenen Seitenansichten;
- Fig. 3: schematisch nach Art eines Blockschaltbildes eine, insb. auch für ein Meßsystem gemäß den Fig. 1, 2 geeignete, Umformer-Elektronik mit daran angeschlossenem Meßwandler vom Vibrations-Typ;
- Fig. 4, 5: in, teilweise geschnittenen bzw. perspektivischen, Ansichten einen, insb. auch für ein Meßsystem gemäß den Fig. 1, 2 geeigneten, Meßwandler vom Vibrations-Typ mit einer mittels zweier Rohre gebildeten Rohranorndung;
- Fig. 6: einen Ausschnitt einer, insb. auch für einen Meßwandler gemäß den Fig. 4, 5 geeigneten, Rohranordnung mit einem an zwei Rohren fixierten Kopplerelement; und
- Fig. 7a, 7b: jeweils einen Ausschnitt einer Variante eines für eine Rohranordnung gemäß Fig. 6 geeigneten Kopplerelements.

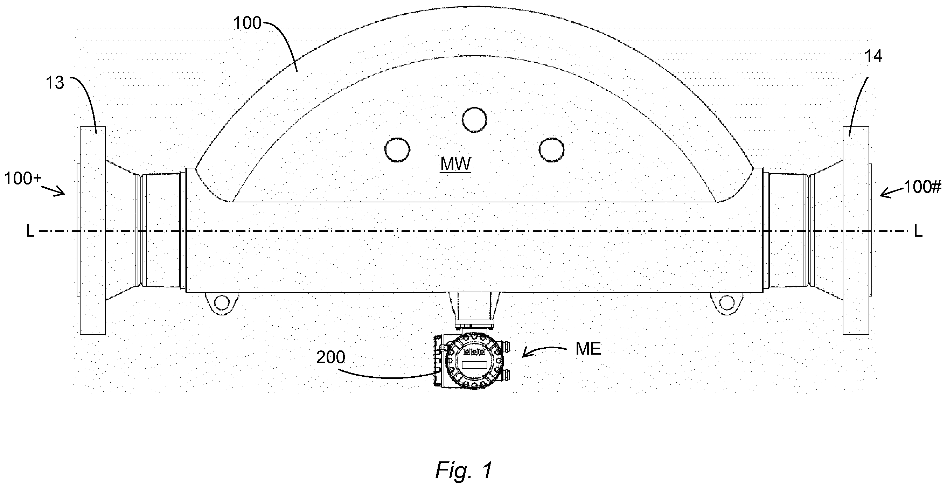

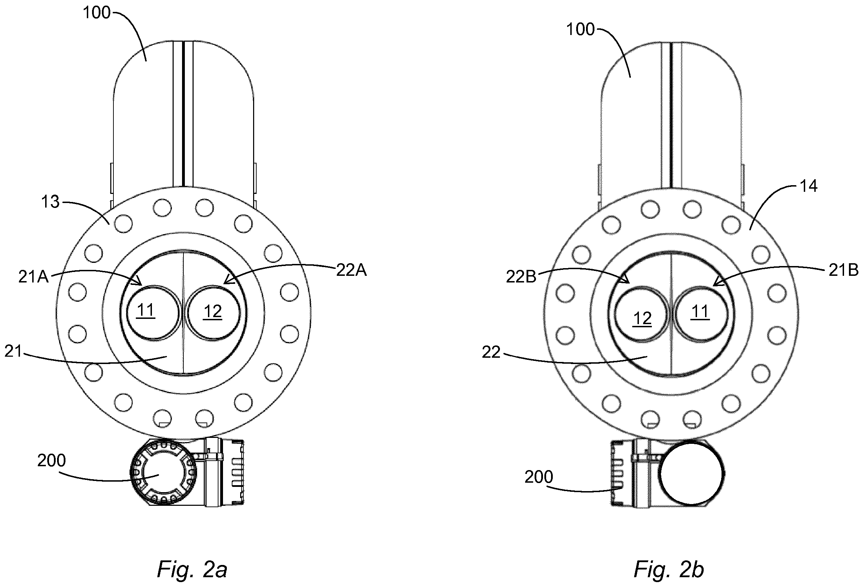

In den Fig. 1, 2a, 2b ist schematisch ein Ausführungsbeispiel für ein in eine - hier nicht dargestellte - Prozeßleitung, etwa eine Rohrleitung einer industriellen Anlage, einfügbares, beispielsweise als Coriolis-Massendurchflußmeßgerät, Dichtemeßgerät, Viskositätsmeßgerät oder dergleichen ausgebildetes, Meßsystem für fließfähige, insb. fluide, Medien, dargestellt, das im besonderen dem Messen und/oder Überwachen wenigstens eines physikalischen Parameters des Mediums, wie etwa einer Massendurchflußrate, einer Dichte, einer Viskosität oder dergleichen. Das - hier als In-Line-Meßgerät in Kompaktbauweise realisierte - Meßsystem umfaßt dafür einen über ein Einlaßende 100+ sowie ein Auslaßende 100# an die Prozeßleitung angeschlossenen, dem Erfassen des wenigstens einen Parameters und dessen Konvertierung dafür repräsentative Meßsignale dienenden Meßwandler MW, welcher Meßwandler im Betrieb entsprechend vom zu messenden Medium, wie etwa einer niedrigviskosen Flüssigkeit und/oder einer hochviskosen Paste, durchströmt und an eine mit dem Meßwandler elektrisch gekoppelte, dem Ansteuern des Meßwandlers und zum Auswerten von vom Meßwandler gelieferten Meßsignalen dienende Umformer-Elektronik ME des Meßsystems angeschlossen ist.

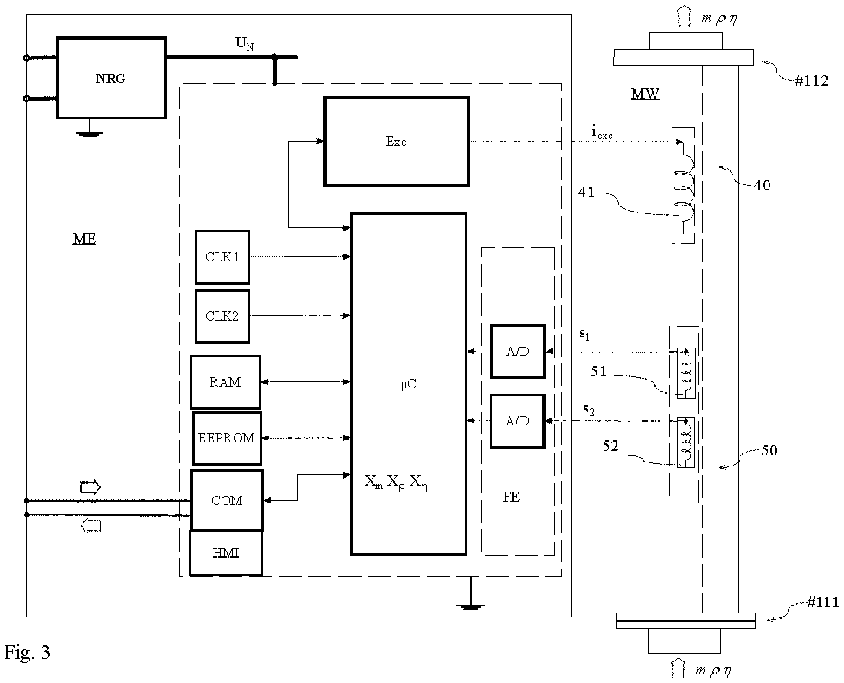

Die, insb. im Betrieb von extern via Anschlußkabel und/oder mittels interner Energiespeicher mit elektrischer Energie versorgte, Umformer-Elektronik weist, wie in Fig. 3 schematisch nach Art eines Blockschaltbildes dargestellt, eine dem Ansteuern des, beispielsweise als Meßwandler vom Vibrationstyp ausgebildeten, Meßwandlers dienende Treiber-Schaltung Exc sowie eine Meßsignale des Meßwandlers MW verarbeitende, beispielsweise mittels eines Mikrocomputers gebildete und/oder im Betrieb mit der Treiber-Schaltung Exc kommunizierende, Meß- und Auswerte-Schaltung µC des Meßsystems elektrisch angeschlossen ist, die im Betrieb die wenigstens eine Meßgröße, wie z.B. den momentanen oder einen totalisierten Massendurchfluß, repräsentierende Meßwerte liefert. Die Treiber-Schaltung Exc und die Auswerte-Schaltung µC sowie weitere, dem Betrieb des Meßsystems dienende Elektronik-Komponenten der Umformer-Elektronik, wie etwa interne Energieversorgungsschaltungen NRG zum Bereitstellen interner Versorgungsspannungen U_{N} und/oder dem Anschluß an ein übergeordnetes Meßdatenverarbeitungssystem und/oder einem Feldbus dienenden Kommunikationsschaltungen COM, sind ferner in einem entsprechenden, insb. schlag- und/oder auch explosionsfest und/oder hermetisch dicht ausgebildeten, Elektronikgehäuse 200 untergebracht. Das Elektronikgehäuse 200 des In-line-Meßgeräts kann unter Bildung eines Meßgeräts in Kompaktbauweise beispielsweise direkt am Meßwandlergehäuse 100 gehaltert sein. Zum Visualisieren von Meßsystem intern erzeugten Meßwerten und/oder gegebenenfalls Meßsystem intern generierten Statusmeldungen, wie etwa eine Fehlermeldung oder einen Alarm, vor Ort kann das Meßsystem desweiteren ein zumindest zeitweise mit der Umformer-Elektronik kommunizierendes Anzeige- und Bedienelement HMI aufweisen, wie etwa ein im Elektronikgehäuse hinter einem darin entsprechend vorgesehenen Fenster plaziertes LCD-, OLED- oder TFT-Display sowie eine entsprechende Eingabetastatur und/oder ein Bildschirm mit Berührungseingabe. In vorteilhafter Weise kann die, insb. programmierbare und/oder fernparametrierbare, Umformer-Elektronik ME ferner so ausgelegt sein, daß sie im Betrieb des In-Line-Meßgeräts mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meßwerte oder der Steuerung des In-line-Meßgeräts dienende Einstell- und/oder Diagnosewerte. Dabei kann die Umformer-Elektronik ME beispielsweise eine solche interne Energieversorgungsschaltung NRG aufweisen, die im Betrieb von einer im Datenverarbeitungssystem vorgesehen externen Energieversorgung über das vorgenannte Feldbussystem gespeist wird. Gemäß einer Ausgestaltung der Erfindung ist die Umformer-Elektronik ferner so ausgebildet, daß sie mittels einer, beispielsweise als 4-20 mA-Stromschleife konfigurierten, Zweidraht-Verbindung 2L mit dem externer elektronischen Datenverarbeitungssystem elektrisch verbindbar ist und darüber mit elektrischer Energie versorgt werden sowie Meßwerte zum Datenverarbeitungssystem übertragen kann. Für den Fall, daß das Meßsystem für eine Ankopplung an ein Feldbus- oder ein anderes Kommunikationssystem vorgesehen ist, kann die Umformer-Elektronik ME eine entsprechende Kommunikations-Schnittstelle COM für eine Datenkommunikation gemäß einem der einschlägigen Industriestandards aufweisen. Das elektrische Anschließen des Meßwandlers an die erwähnte Umformer-Elektronik kann mittels entsprechender Anschlußleitungen erfolgen, die aus dem Elektronik-Gehäuse 200, beispielsweise via Kabeldurchführung, heraus geführt und zumindest abschnittsweise innerhalb des Meßwandlergehäuses verlegt sind. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein, vgl. hierzu auch die eingangs erwähnten US-B 67 11 958 oder US-A 53 49 872.

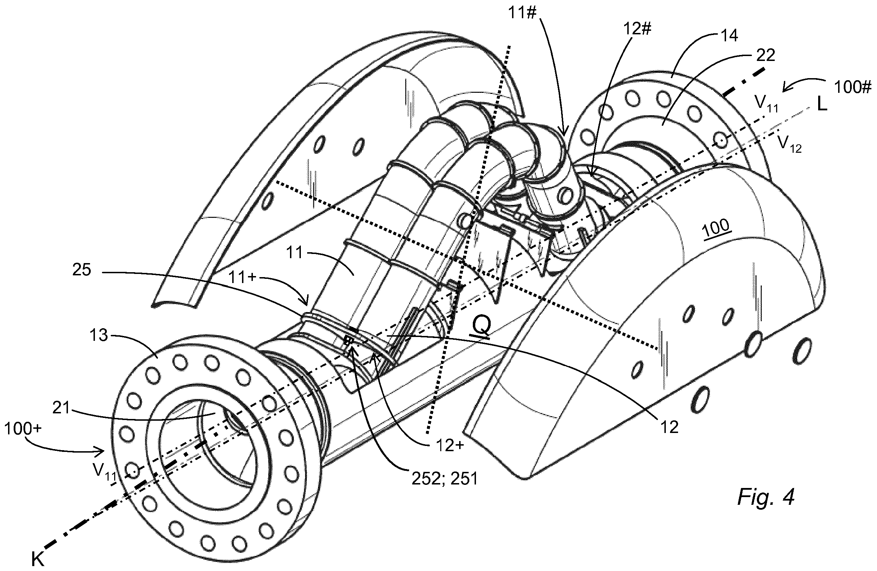

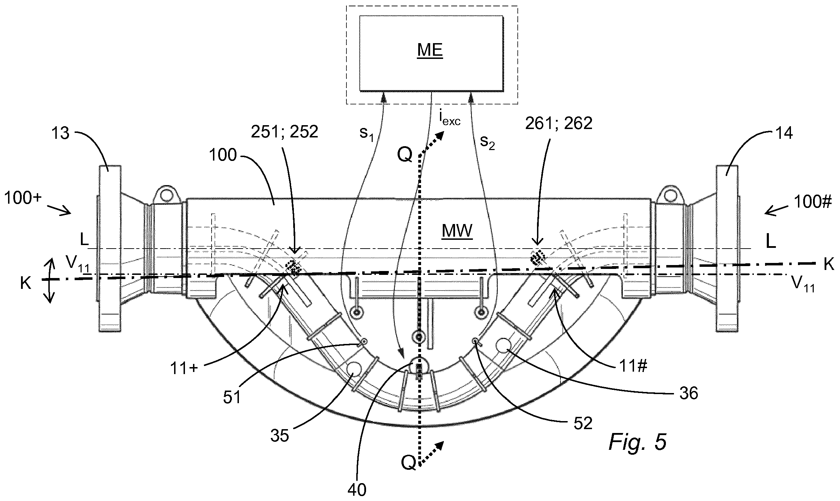

In den Fig. 4 und 5 ist ferner ein Ausführungsbeispiel für einen für die Realisierung des Meßsystems geeigneten Meßwandler MW schematisch dargestellt. Der hier gezeigte Meßwandler MW ist als Meßwandler vom Vibrationstyp ausgebildet und dient generell dazu, in einem hindurchströmenden Medium, etwa einem Gas und/oder einer Flüssigkeit, mechanische Reaktionskräfte, z.B. massedurchflußabhängige Coriolis-Kräfte, dichteabhängige Trägheitskräfte und/oder viskositätsabhängige Reibungskräfte, zu erzeugen, die sensorisch erfaßbar und insoweit auch meßbar auf den Meßwandler zurückwirken. Abgeleitet von diesen Reaktionskräften können so z.B. die Parameter Massedurchflußrate m, Dichte ρ und Viskosität η des Mediums gemessen werden.

Zum Erfassen des wenigstens einen Parameters umfaßt der Meßwandler ein in einem Meßwandler-Gehäuse 100 angeordnetes und im Betrieb von der Umformer-Elektronik ME angesteuertes Innenteil, das die physikalisch-elektrische Konvertierung des wenigstens einen zu messenden Parameters bewirkt.

Zum Führen des strömenden Mediums weist das hier gezeigte Innenteil und insoweit der hier gezeigte Meßwandler gemäß einer Ausgestaltung der Erfindung ferner einen dem Aufteilen von einströmendem Medium in zwei Teilströmungen dienenden einlaßseitigen ersten Strömungsteiler 21 mit wenigstens zwei voneinander beabstandeten Strömungsöffnungen 21A, 21B, einen dem Wiederzusammenführen der Teilströmungen dienenden auslaßseitigen zweiten Strömungsteiler 22 mit wenigsten zwei voneinander beabstandeten Strömungsöffnungen 22A, 22B sowie wenigstens zwei unter Bildung einer Rohranordnung mit zumindest zwei strömungstechnisch parallel geschalteten Strömungspfaden an die, insb. baugleichen, Strömungsteiler 21, 22 angeschlossene - schlußendlich als von Medium durchströmte Meßrohre dienende - Rohre 11, 12 auf. Dabei münden ein erstes Rohr 11 mit einem einlaßseitigen ersten Rohrende in eine erste Strömungsöffnung 21A des ersten Strömungsteilers 21 und mit einem auslaßseitigen zweiten Rohrende in eine erste Strömungsöffnung 22A des zweiten Strömungsteilers 22 und ein zweites Rohr 12 mit einem einlaßseitigen ersten Rohrende in eine zweite Strömungsöffnung 21B des ersten Strömungsteilers 21 und mit einem auslaßseitigen zweiten Rohrende in eine zweite Strömungsöffnung 22B des zweiten Strömungsteilers 202, so daß also beide - insoweit auch miteinander mechanische gekoppelten - (Meß-) Rohre bei dieser Ausgestaltung der Erfindung im ungestörten Betrieb des Meßsystem gleichzeitig und parallel von Medium durchströmt sind. Die beiden Rohre 11, 12 können beispielsweise - wie auch die beiden Strömungsteiler 21, 22 - aus Metall, wie z.B. Edelstahl, Zirkonium-, Tantal-, Platin- und/oder Titan-Legierungen, hergestellt und stoffschlüssig - etwa durch Schweißen oder Löten - oder auch kraftschlüssig - etwa durch Einwalzen gemäß der eingangs erwähnten US-A 56 10 342 - mit den Strömungsteilern verbunden sein. Im hier gezeigten Ausführungsbeispiel sind die Strömungsteiler insoweit integraler Bestandteil des Meßwandlergehäuses, als mittels des ersten Strömungsteilers ein das Einlaßende 100+ des Meßwandlers definierendes einlaßseitige erstes Gehäuseende und mittels des zweiten Strömungsteilers ein das Auslaßende 100# des Meßwandlers definierendes auslaßseitige zweite Gehäuseende gebildet sind. Für den typischen Fall, daß der Meßwandler MW lösbaren mit der, beispielsweise als metallische Rohrleitung ausgebildeten, Prozeßleitung zu montieren ist, sind einlaßseitig des Meßwandlers einer erster Anschlußflansch 13 für den Anschluß an ein Medium dem Meßwandler zuführendes Leitungssegment der Prozeßleitung und auslaßseitig ein zweiter Anschlußflansch 14 für ein Medium vom Meßwandler abführendes Leitungssegment der Prozeßleitung vorgesehen. Die Anschlußflansche 13, 14 können dabei, wie bei Meßwandlern der beschriebenen Art durchaus üblich auch an das jeweilige Gehäuseende angeschweißt und insoweit endseitig in das Meßwandlergehäuse 100 integriert sein.

Im hier gezeigten Ausführungsbeispiel ist ferner jedes der zwei, sich jeweils zwischen seinem einlaßseitigen ersten Rohrende 11+ bzw. 12+ und seinem auslaßseitigen zweiten Rohrende 11# bzw. 12# mit einer - im wesentlichen frei schwingenden - Nutz-Schwinglänge erstreckenden Rohre 11, 12 zumindest abschnittsweise gekrümmt. Zum Erzeugen vorgenannter Reaktionskräfte wird jedes der zwei Rohre im Betrieb zumindest über seine Schwinglänge vibrieren gelassen - beispielsweise mit gleicher Schwingfrequenz wie das jeweils andere Rohr, jedoch dazu gegengleich - und dabei, um eine statische Ruhelage oszillierend, wiederholt elastisch verformt. Die jeweilige Schwinglänge entspricht hierbei einer Länge einer innerhalb von Lumen verlaufende gedachte Mittel- oder auch Schwerelinie (gedachte Verbindungslinie durch die Schwerpunkte aller Querschnittsflächen des jeweiligen Rohrs), im Falle gekrümmter Rohr also einer gestreckten Länge des jeweiligen Rohrs 11 bzw. 12. Nach einer weiteren Ausgestaltung der Erfindung wird jedes der Rohre im Betrieb so vibrieren gelassen, daß es um eine Schwingungsachse, insb. in einem Biegeschwingungsmode, schwingt, die zu einer die beiden jeweiligen Rohrenden 11+, 11# bzw. 12+, 12+' imaginär verbindenden gedachten Verbindungsachse V₁₁ bzw. V₁₂ jeweils parallel ist.

Die, beispielsweise im Betrieb im wesentlichen gegengleich zueinander oszillierenden, Rohre sind ferner unter Bildung einer ersten Kopplungszone einlaßseitig mittels eines, beispielsweise plattenförmigen, ersten Kopplerelements 25 und unter Bildung einer zweiten Kopplungszone auslaßseitig mittels eines, beispielsweise plattenförmigen, zweiten Kopplerelements 26 miteinander mechanisch verbunden. Somit definieren hier also die erste Kopplungszone jeweils ein - einlaßseitig an die Nutzschwinglänge angrenzendes - einlaßseitiges erstes Rohrende 11+, 12+ jedes der zwei Rohre 11, 12 und die zweite Kopplungszone jeweils ein auslaßseitiges zweites Rohrende 11#, 12# des jeweiligen Rohrs 11 bzw. 12. Jedes der Kopplerelemente 25, 26 kann, wie beispielsweise auch die beiden Rohre 11, 12 und wie bei Meßwandlern der in Rede stehenden Art durchaus üblich, aus einem Metall, wie z.B. Stahl oder Edelstahl, und/oder aus dem gleichen Material wie die beiden Rohre 11, 12 bestehen, so daß im Ergebnis die Kopplerelement 25, 26, und die Rohre 11, 12 sehr einfach mittels Löt- und/oder mittels Schweißverbindungen miteinander verbunden sein können.

Wie aus der Zusammenschau der Fig. 4 und 5 ferner ersichtlich ist das Kopplerelement 25 gleichweit vom ersten Gehäuseende des Meßwandlergehäuses entfernt angeordnet, wie das zweite Kopplerelement 26 vom zweiten Gehäuseende des Meßwandlergehäuses. Jedes der Meßrohre ist im hier gezeigten Ausführungsbeispiel ferner so geformt und im Meßwandler angeordnete, daß vorgenannte Verbindungsachse im wesentlichen parallel zu einer Ein- und Auslaßende des Meßwandlers imaginär verbindenden gedachten Längsachse L des Meßwandlers verläuft. Jedes der, beispielsweise aus Edelstahl, Titan, Tantal bzw. Zirkonium oder einer Legierung davon hergestellten, Meßrohre des Meßwandlers und insoweit auch eine innerhalb von Lumen verlaufende gedachte Mittellinie des jeweiligen Meßrohrs kann z.B. im wesentlichen U-förmig, trapezförmig, rechteckförmig oder, wie auch in der Fig. 4 und 5 gezeigt, im wesentlichen V-förmig ausgebildet sein.

Wie aus der Zusammenschau der Fign. 4 und 5 ohne weiteres ersichtlich, ist jedes der wenigstens zwei Rohre 11, 12 hier zudem jeweils so geformt und angeordnet, daß vorgenannte Mittellinie, wie bei Meßwandlern der in Rede stehenden Art durchaus üblich, jeweils in einer gedachten Rohrebene liegt und daß die vorgenannten zwei Verbindungsachse V₁₁, V₁₂ zueinander parallel, mithin senkrecht zu einer gedachten Mittelebene Q der Rohranordnung, verlaufen, beispielsweise auch so, daß die beiden gedachten Rohrebenen zueinander parallel sind.

Gemäß einer weiteren Ausgestaltung der Erfindung sind die Rohre 11, 12 und die beiden Kopplerelemente 25, 26 ferner so geformt und relativ zueinander ausgerichtet, daß die beiden Kopplerelemente 25, 26 bezüglich nämlicher Mittelebene Q der Rohranordnung äquidistant sind, mithin also ein Massenschwerpunkt M₂₅ des ersten Kopplerelements 25 im wesentlichen gleichweit entfernt von nämlicher Mittelebene lokalisiert ist, wie ein Massenschwerpunkt M₂₆ des zweiten Kopplerelements 26. Die frequenzjustierende Wirkung von Kopplerelementen der vorgenannten Art resultiert hierbei bekanntlich daraus, daß jedes der beiden Kopplerelemente jeweils eine Biegesteifigkeit auch um eine den Massenschwerpunkt M₂₅ des ersten Kopplerelements 25 und den Massenschwerpunkt des zweiten Kopplerelements 26 imaginär verbindende, insb. das erste Kopplerelement mit einem gleichen Schnittwinkel wie das zweite Kopplerelement imaginär schneidende, gedachte Längsachse K der Rohranordnung aufweist, welche jeweilige Biegesteifigkeit jeweils einen Beitrag zu einer, nicht zuletzt auch von (Einzel-) Biegesteifigkeiten der Rohre abhängige, die Eigenfrequenzen der Rohranordnung mitbestimmende Gesamtsteifigkeit leistet.

Es sei an dieser Stelle ferner darauf hingewiesen, daß - wenngleich der Meßwandler im in den Fig. 4 und 5 gezeigten Ausführungsbeispiel zwei gekrümmte Meßrohre aufweist und zumindest insoweit in seinem mechanischen Aufbau wie auch seinem Wirkprinzip dem in den US-B 69 20 798 oder US-A 57 96 011 vorgeschlagenen bzw. auch den seitens der Anmelderin unter der Typbezeichnung "PROMASS E" oder "PROMASS F" käuflich angebotenen Meßwandlern ähnelt - die Erfindung selbstverständlich auch auf Meßwandler mit geraden und/oder mehr als zwei Meßrohren, beispielsweise also vier parallelen Meßrohren, Anwendung finden kann, etwa vergleichbar den in den eingangs erwähnten US-A 56 02 345 oder WO-A 96/08697 gezeigten oder beispielsweise auch den seitens der Anmelderin unter der Typbezeichnung "PROMASS M" käuflich angebotenen Meßwandlern. Im übrigen kann der Meßwandler aber auch mittels einer lediglich ein einziges im Betrieb Medium führenden Meßrohrs mit daran gekoppeltem Blind- oder auch Tilgerrohr aufweisenden Rohranordnung gebildet sein, vergleichbar also etwa den in der US-A 55 31 126 oder der US-B 66 66 098 gezeigten oder beispielsweise auch den seitens der Anmelderin unter der Typbezeichnung "PROMASS H" käuflich angebotenen Meßwandlern.

Zum aktiven Anregen mechanischer Schwingungen der wenigstens zwei, insb. auch zueinander parallelen und/oder hinsichtlich Form und Material baugleichen, Rohre, insb. auf einer oder mehreren von deren, von der Dichte des darin momentan jeweils geführten Mediums abhängigen natürlichen Eigenfrequenzen, ist Meßwandler ferner eine elektromechanische, insb. elektrodynamische, also mittels Tauchankerspulen gebildete, Erregeranordnung 40 vorgesehen. Diese dient - angesteuert von einem von der Treiber-Schaltung der Umformer-Elektronik gelieferten und, gegebenenfalls im Zusammenspiel mit der Meß- und Auswerte-Schaltung, entsprechend konditionierten Erregersignal, z.B. mit einem geregelten Strom und/oder einer geregelten Spannung -jeweils dazu, mittels der Treiber-Schaltung eingespeiste elektrische Erregerenergie bzw. -leistung E_{exc} in eine auf die wenigstens zwei Rohre, z.B. pulsförmig oder harmonisch, einwirkende und diese in der vorbeschriebenen Weise auslenkende Erregerkraft F_{exc} umzuwandeln. Die Erregerkraft F_{exc} kann, wie bei derartigen Meßwandlern üblich, bidirektional oder unidirektional ausgebildet sein und in der dem Fachmann bekannten Weise z.B. mittels einer Strom- und/oder Spannungs-Regelschaltung, hinsichtlich ihrer Amplitude eingestellt und, z.B. mittels einer Phasen-Regelschleife (PLL), hinsichtlich ihrer Frequenz auf eine momentane mechanische Eigenfrequenz der Rohranordnung abgestimmt werden. Der Aufbau und die Verwendung solcher dem Abgleichen einer Erregerfrequenz, f_{exc}, des Erregersignals auf die momentane Eigenfrequenz des gewünschten Nutzmodes dienenden Phasenregel-Schleifen ist z.B. in der US-A 48 01 897 ausführlich beschrieben. Selbstverständlich können auch andere für das Einstellen der Erregerenergie E_{exc} geeignete, dem Fachmann an und für sich bekannte Treiberschaltungen verwendet werden, beispielsweise auch gemäß den eingangs erwähnten US-A 48 79 911, US-A 50 09 109, US-A 50 50 439, oder US-B 63 111 36. Ferner sei hinsichtlich einer Verwendung solcher Treiberschaltungen für Meßwandler vom Vibrationstyp auf die mit Meßumformern der Serie "PROMASS 83" bereitgestellte Umformer-Elektroniken verwiesen, wie sie von der Anmelderin beispielsweise in Verbindung mit Meßwandlern der Serie "PROMASS E", "PROMASS F", "PROMASS M", oder auch "PROMASS H" angeboten werden. Deren Treiberschaltung ist beispielsweise jeweils so ausgeführt, daß die lateralen Biegeschwingungen im Nutzmode auf eine konstante, also auch von der Dichte, p, weitgehend unabhängige Amplitude geregelt werden.

Nach einer weiteren Ausgestaltung der Erfindung sind die wenigstens zwei Rohre 11, 12 im Betrieb mittels der Erregeranordnung zumindest zeitweise in einem Nutzmode aktiv angeregt, in dem sie, insb. überwiegend oder ausschließlich, Biegeschwingungen um die erwähnte gedachte Schwingungsachse ausführen, beispielsweise überwiegend mit genau einer natürlichen Eigenfrequenz (Resonanzfrequenz) der Rohranordnung, wie etwa jener, die einem Biegeschwingungsgrundmode entspricht, in dem jedes der Rohre innerhalb seiner jeweiligen Nutz-Schwinglänge genau einen Schwingungsbauch aufweist. Im besonderen ist hierbei ferner vorgesehen, daß jedes der Rohre, wie bei derartigen Meßwandlern mit gekrümmten Rohren durchaus üblich, mittels der Erregeranordnung zu Biegeschwingungen bei einer Erregerfrequenz f_{exc} so angeregt ist, daß es sich im Nutzmode, um die erwähnte gedachte Schwingungsachse - etwa nach Art eines einseitig eingespannten Auslegers - oszillierend, zumindest anteilig gemäß einer seiner natürlichen Biegeschwingungsformen ausbiegt. Die mittels der Erregeranordnung aktiv angeregten Biegeschwingungen der Rohren weisen dabei jeweils im Bereich der das jeweilige einlaßseitige Rohrende definierenden einlaßseitigen Kopplungszone einen einlaßseitigen Schwingungsknoten und im Bereich der das jeweilige auslaßseitige Rohrende definierenden auslaßseitigen Kopplungszone einen auslaßseitigen Schwingungsknoten auf, so daß also sich das jeweilige Rohr mit seiner Schwinglänge zwischen diesen beiden Schwingungsknoten im wesentlichen frei schwingend erstreckt.

Wie bei Meßwandlern mit einer Rohranordnung der in Rede stehenden Art durchaus üblich, sind die Rohre mittels der, beispielsweise differentiell zwischen beiden Rohren wirkenden, Erregeranordnung dabei insb. so angeregt, daß sie im Betrieb zumindest zeitweise und zumindest anteilig gegengleiche Biegeschwingungen um die Längsachse L ausführen. Anders gesagt, die beiden Rohre 11, 12 bewegen sich dann jeweils nach der Art von gegeneinander schwingenden Stimmgabelzinken. Für diesen Fall ist gemäß einer weiteren Ausgestaltung der Erfindung die Erregeranordnung dafür ausgelegt, gegengleiche Vibrationen des ersten Rohrs und des zweiten Rohrs, insb. Biegeschwingungen jedes der Rohre um eine das jeweilige erste Rohrende und das jeweilige zweite Rohrende imaginär verbindende gedachte Schwingungsachse, anzuregen bzw. aufrechtzuerhalten. Als Erregeranordnung 40 kann hierbei z.B. eine in konventioneller Weise mittels eines - beispielsweise einzigen - mittig, also im Bereich einer halben Schwinglänge, zwischen den wenigstens zwei Rohrplazierten und differentiell auf die Rohre wirkenden elektrodynamischen Schwingungserregers 41 gebildete Erregeranordnung 40 dienen. Der Schwingungserreger 41 kann, wie in der Fig. 4 angedeutet, beispielsweise mittels einer am ersten Rohr befestigten zylindrischen Erregerspule, die im Betrieb von einem entsprechenden Erregerstrom durchflossen und damit einhergehend von einem entsprechenden Magnetfeld durchflutet ist, sowie einem in die Erregerspule zumindest teilweise eintauchenden dauermagnetischen Anker, der von außen, insb. mittig, am zweiten Rohr fixiert ist, gebildet sein. Weitere - durchaus auch für das erfindungsgemäße Meßsystem geeignete - Erregeranordnungen für Schwingungen der wenigstens zwei Rohrs sind z.B. in den eingangs erwähnten US-A 46 80 974, US-A 47 38 144, US-A 47 68 384, US-A 48 01 897, US-A 48 23 614, US-A 48 79 911, US-A 50 09 109, US-A 50 50 439, US-A 53 59 881, US-A 56 02 345, US-A 57 34 112, US-A 57 96 011, US-A 59 26 096, US-A 59 69 264, US-A 60 92 429, US-A 63 111 36, US-B 68 83 387, US-B 71 27 952, US-B 73 25 461, US-B 73 92 709, oder US-B 74 21 350 gezeigt.

Zum Vibrierenlassen der wenigsten zwei Rohre des Meßwandlers wird die Erregeranordnung 40, wie bereits erwähnt, mittels eines gleichfalls oszillierenden Erregersignals von einstellbarer Erregerfrequenz f_{exc} gespeist, so daß die Erregerspule des - hier einzigen am Rohr10 angreifenden Schwingungserregers - im Betrieb von einem in seiner Amplitude entsprechend geregelten Erregerstrom i_{exc} durchflossen ist, wodurch ein zum Bewegen der Rohre erforderliches Magnetfeld erzeugt wird. Das Treiber- oder auch Erregersignal bzw. dessen Erregerstrom i_{exc} kann z.B. harmonisch, mehrfrequent oder auch rechteckförmig sein. Die Erregerfrequenz f_{exc} des zum Aufrechterhalten der aktiv angeregten Vibrationen der Rohre erforderlichen Erregerstrom kann beim im Ausführungsbeispiel gezeigten Meßwandler in vorteilhafter Weise so gewählt und eingestellt sein, daß die Rohre, wie bereits erwähnt, überwiegend in einem Biegeschwingungsgrundmode oszillieren.

Für den betriebsmäßig vorgesehenen Fall, daß das Medium in der Prozeßleitung strömt und somit der Massendurchfluß m in der Rohranordnung von Null verschieden ist, werden mittels der in oben beschriebener Weise vibrierenden Rohre im hindurchströmenden Medium auch Corioliskräfte induziert. Diese wiederum wirken auf das jeweils durchströmte Rohr zurück und bewirken so eine zusätzliche, sensorisch erfaßbare Verformung derselben, und zwar im wesentlichen gemäß einer weiteren natürlichen Eigenschwingungsform von höherer modaler Ordnung als der Nutzmode. Eine momentane Ausprägung dieses sogenannten, dem angeregten Nutzmode gleichfrequent überlagerten Coriolismodes ist dabei, insb. hinsichtlich ihrer Amplituden, auch vom momentanen Massedurchfluß m abhängig. Als Coriolismode kann, wie bei Meßwandlern mit gekrümmten Rohren üblich, z.B. die Eigenschwingungsform des anti-symmetrischen Twistmodes dienen, also jene, bei der das jeweils durchströmte Rohr, wie bereits erwähnt, auch Drehschwingungen um eine senkrecht zur Biegschwingungsachse ausgerichteten gedachten Drehschwingungsachse ausführt, die die Mittelinie des jeweiligen Rohrs im Bereich der halben Schwingungslänge imaginär schneidet.

Zum Erfassen von Vibrationen der Rohre, insb. auch Schwingungen im Coriolismode, weist der Meßwandler ferner eine entsprechende Sensoranordnung 50 auf. Diese umfaßt, wie auch in den Fig. 4 und 5 schematische dargestellt, wenigstens einen, beispielsweise elektrodynamischen und/oder vom wenigstens einen Schwingungserreger beabstandet zwischen den wenigstens zwei Rohren 10 angeordneten, ersten Schwingungssensor 51, der ein Vibrationen wenigstens eines der zwei Rohre, beispielsweise auch gegengleiche Vibrationen der wenigstens zwei Rohre, repräsentierendes erstes Vibrationsmeßsignal s₁ des Meßwandlers liefert, beispielsweise einer mit den Schwingungen korrespondierende Spannung oder einen mit den Schwingungen korrespondierenden Strom. Ferner ist gemäß einer Weiterbildung der Erfindung vorgesehen, daß die Sensoranordnung zumindest einen, beispielsweise vom ersten Schwingungssensor 52 beabstandet zwischen den wenigstens zwei Rohren 10 angeordneten und/oder elektrodynamischen, zweiten Schwingungssensor 52 aufweist, der ein Vibrationen wenigstens eines der zwei Rohre, beispielsweise auch gegengleiche Vibrationen der wenigstens zwei Rohre, repräsentierendes zweites Vibrationsmeßsignal s₂ des Meßwandlers liefert. Die Schwingungssensoren der Sensoranordnung können in vorteilhafter Weise zudem so ausgebildet sein, daß sie Vibrationsmeßsignal gleichen Typs liefern, beispielsweise jeweils eine Signalspannung bzw. einen Signalstrom. Im hier gezeigten Ausführungsbeispiel sind der erste Schwingungssensor 51 einlaßseitig und der zweite Schwingungssensor 52 auslaßseitig zwischen den wenigstens zwei Rohren 10 angeordnet, insb. vom wenigstens einen Schwingungserreger bzw. von der Mitte des Rohrs 10 gleichweit beabstandet wie der erste Schwingungssensor bzw. derart, daß gegengleiche Vibrationen der beiden Rohre differentiell erfaßt sind. Die Schwingungssensoren der Sensoranordnung können beispielsweise aber auch so ausgebildet und im Meßwandler angeordnet sein, daß sie, wie u.a. auch in der US-A 56 02 345 vorgeschlagen, die Schwingungen relativ zum Meßwandlergehäuse erfassen.

Jedes der - typischerweise breitbandigen - Vibrationssignale s₁, s₂ des Meßwandlers MW weist dabei jeweils eine mit dem Nutzmode korrespondierende Signalkomponente mit einer der momentanen Schwingfrequenz f_{exc} der im aktiv angeregten Nutzmode schwingenden Rohre entsprechenden Signalfrequenz und einer vom aktuellen Massendurchfluß des in der Rohranordnung strömenden Medium abhängigen Phasenverschiebung relativ zu dem, beispielsweise mittels PLL-Schaltung in Abhängigkeit von einer zwischen wenigstens einem der Vibrationssignale s₁, s₂ und dem Erregerstrom in der Erregeranordnung existierenden Phasendifferenz generierten, Erregersignal i_{exc} auf. Selbst im Falle der Verwendung eines eher breitbandigen Erregersignals i_{exc} kann infolge der zumeist sehr hohen Schwingungsgüte des Meßwandlers MW davon ausgegangen werden, daß die mit dem Nutzmode korrespondierende Signalkomponente jedes der Vibrationssignale andere, insb. mit allfälligen externen Störungen korrespondierende und/oder als Rauschen einzustufende, Signalkomponenten überwiegt und insoweit auch zumindest innerhalb eines einer Bandbreite des Nutzmodes entsprechenden Frequenzbereichs dominierend ist.

Die vom Meßwandler gelieferten Vibrationsmeßsignale s₁, s₂, die jeweils eine Signalkomponente mit einer momentanen Schwingfrequenz f_{exc} der im aktiv angeregten Nutzmode schwingenden wenigstens zwei Rohre entsprechende Signalfrequenz aufweisen, sind, wie auch in Fig. 3 gezeigt, der Umformer-Elektronik ME und daselbst dann der darin vorgesehenen Meß- und Auswerteschaltung µC zugeführt, wo sie mittels einer entsprechenden Eingangsschaltung FE zunächst vorverarbeitet, insb. vorverstärkt, gefiltert und digitalisiert werden, um anschließend geeignet ausgewertet werden zu können. Als Eingangsschaltung FE wie auch als Meß- und Auswerteschaltung µC können hierbei in herkömmlichen Coriolis-Massedurchfluß-Meßgeräten zwecks Konvertierung der Vibrationssignale verwendete bzw. Ermittlung von Massendurchflußraten und/oder totalisierten Massendurchflüssen etc. bereits eingesetzte und etablierte Schaltungstechnologien angewendet werden, beispielsweise auch solche gemäß den eingangs erwähnten Stand der Technik. Nach einer weiteren Ausgestaltung der Erfindung ist die Meß- und Auswerteschaltung µC dementsprechend auch mittels eines in der Umformer-Elektronik ME vorgesehenen, beispielsweise mittels eines digitalen Signalprozessors (DSP) realisierten, Mikrocomputers und mittels in diesen entsprechend implementierter und darin ablaufender Programm-Codes realisiert. Die Programm-Codes können z.B. in einem nicht-flüchtigen Datenspeicher EEPROM des Mikrocomputers persistent gespeichert sein und beim Starten desselben in einen, z.B. im Mikrocomputer integrierten, flüchtigen Datenspeicher RAM geladen werden. Für derartige Anwendungen geeignete Prozessoren sind z.B. solche vom Typ TMS320VC33, wie sie von der Firma Texas Instruments Inc. am Markt angeboten werden. Es versteht sich dabei praktisch von selbst, daß die Vibrationssignale s₁, s₂ wie bereits angedeutet, für eine Verarbeitung im Mikrocomputer mittels entsprechender Analog-zu-digital-Wandler A/D der Umformer-Elektronik ME in entsprechende Digitalsignale umzuwandeln sind, vgl. hierzu beispielsweise die eingangs erwähnten US-B 63 11 136 oder US-A 60 73 495 oder auch vorgenannten Meßumformer der Serie "PROMASS 83".

Die Umformer-Elektronik ME bzw. die darin enthaltene Meß- und Auswerteschaltung µC dient dabei gemäß einer weiteren Ausgestaltung der Erfindung dazu, unter Verwendung der von der Sensoranordnung 50 gelieferten Vibrationsmeßsignale s₁, s₂, beispielsweise anhand einer zwischen den bei anteilig in Nutz- und Coriolismode schwingendem Rohr10 generierten Vibrationssignalen s₁, s₂ des ersten und zweiten Schwingungssensors 51, 52 detektierten Phasendifferenz, wiederkehrend einen Massendurchfluß-Meßwert Xₘ zu ermitteln, der eine Massendurchflußrate des im Meßwandler strömenden Mediums repräsentiert. Dafür erzeugt die Umformer-Elektronik gemäß einer weiteren Ausgestaltung der Erfindung im Betrieb wiederkehrend einen Phasendifferenz-Meßwert X_{Δϕ}, der die zwischen dem ersten Vibrationssignal s₁ und dem zweiten Vibrationssignal s₂ existierenden Phasendifferenz Δϕ momentan repräsentiert. Alternativ oder in Ergänzung zur Ermittlung des Massendurchfluß-Meßwert Xₘ kann die Umformer-Elektronik ME des Meßsystems auch dazu dienen, abgleitet von einer anhand der Vibrationsmeßsignale oder des Errgersignals ermittelten momentanen Schwingungsfrequenz, insb. der des aktiv angeregten Nutzmodes, einen Dichte-Meßwert zu erzeugen, der eine Dichte des im Meßwandler strömenden Mediums repräsentiert. Ferner kann die Umformer-Elektronik ME wie bei In-Line-Meßgeräten der in Rede stehenden Art durchaus üblich ggf. auch dazu verwendet werden, einen eine Viskosität des im Meßwandler strömenden Mediums repräsentierenden Viskositäts-Meßwert X_{η} zu ermitteln, vgl. hierzu auch die eingangs erwähnten US-B 72 84 449, US-B 70 17 424, US-B 69 10 366, US-B 68 40 109, der US-A 55 76 500 oder US-B 66 51 513. Zur Ermittlung der zum Bestimmen der Viskosität erforderlichen Erregerenergie oder Erregerleistung bzw. Dämpfung eignet sich dabei beispielsweise das von Treiberschaltung der Umformer-Elektronik gelieferte Erregersignal, insb. eine Amplitude und Frequenz von dessen den Nutzmode treibender Stromanteil oder auch eine Amplitude des gesamten, ggf. auch auf eine anhand wenigstens eines der Vibrationssignale ermittelte Schwingungsamplitude normierten Erregerstroms. Alternativ oder in Ergänzung dazu kann aber auch ein dem Einstellen des Treibersignals bzw. des Erregerstroms dienendes internes Steuersignal oder, beispielsweise im Falle einer Anregung der Vibrationen des wenigstens einen Rohrs mit einem Erregerstrom von fest vorgegebener bzw. auf konstant geregelter Amplitude, auch wenigstens eines der Vibrationssignale, insb. eine Amplitude davon, als ein Maß der für die Ermittlung des Viskositäts-Meßwerts erforderlichen Erregerenergie oder Erregerleistung bzw. Dämpfung dienen.

Wie bereits erwähnt besteht bei Rohranordnungen der in Rede stehenden Art, mithin auch damit gebildeten Meßwandlern vom Vibrationstyp, ein besonders Erfordernis darin, eine oder mehrere von deren Eigenfrequenzen - nicht zuletzt auch die Eigenfrequenz des für den erwähnten Nutzmodes vorgesehenen Eigenmodes - jeweils möglichst genau auf eine für den jeweiligen Eigenmode unter definierten Referenzbedingungen vorgegebene Ziel-Eigenfrequenz zu trimmen. Als Referenz können hierbei beispielsweise eine atmosphärisch offene, mithin lediglich Luft führende, Rohranordnung bei Raumtemperatur, beispielsweise also etwa 20°C, mithin die für eine solche Rohranordnung vorab jeweils entsprechend ermittelten Ziel-Eigenfrequenzen dienen. Darüberhinaus ist auch von erheblichen Interesse, in Rohranordnungen der in Rede stehenden Art, solche Asymmetrien von Massen- und/oder Steifigkeitsverteilungen innerhalb der Rohranordnung zu vermeiden bzw. zu kompensieren, die zur unerwünschten Ausbildung asymmetrischer Schwingungmoden, etwa nach Art des Coriolismodes, auch bei nicht von Medium durchströmter Rohranordnung führen bzw. dies begünstigen. Das erfindungsgemäße Verfahren zielt nunmehr darauf ab, die Präzision, mit der ein solcher Abgleich einer mittels eines oder mehreren Rohren, mithin mittels einem oder mehreren Meßrohren (bzw. auch ggf. vorgesehene Blind- oder Tilgerrohre) gebildeten Rohranordnung hinsichtlich wenigstens einer Ziel-Eigenfrequenz durchgeführt wird, zu erhöhen und nämlichen Abgleich möglichst einfach zu gestalten.

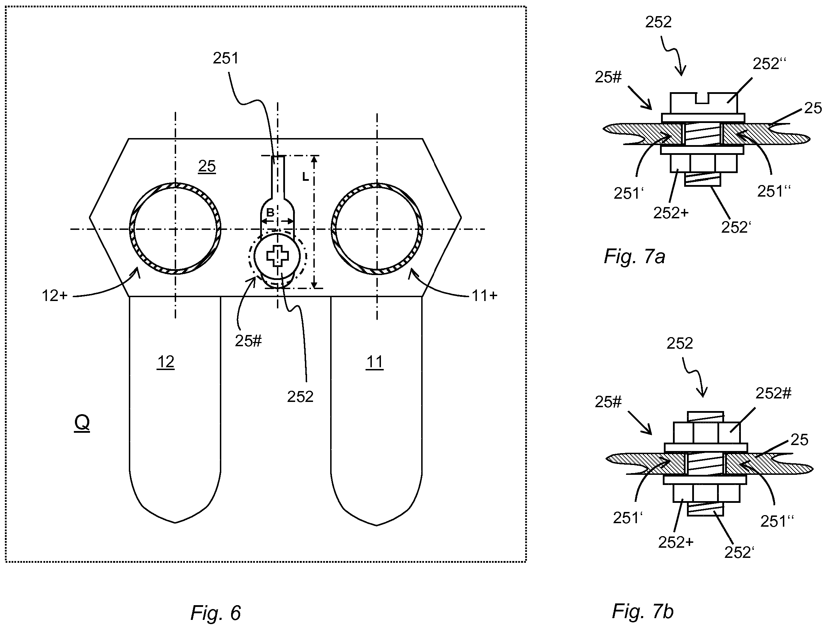

Beim erfindungsgemäßen Meßwandler ist daher, daß, wie auch in Fig. 6 schematisiert dargestellt, vorgesehen, wenigstens eines der beiden Kopplerelemente 25, 26 - hier nämlich das erste Kopplerelement 25 - in einem sich zwischen dem ersten und zweiten Rohr 11, 12 erstreckenden Bereich ein wenigstens ein geschlossenes Ende aufweisenden Schlitz 251 mit einer maximalen Schlitzbreite B und einer maximalen Schlitzlänge L, die größer als die maximalen Schlitzbreite B ist, aufweist. Der, beispielsweise als ein Langloch oder als ein einseitig offener gerader Längsschlitz ausgebildete, Schlitz 251 erstreckt sich im hier gezeigten Ausführungsbeispiel über seine gesamte Länge L entlang einer gedachten Mittellinie des Kopplerelements 25. Ferner weist nämliches Kopplerelement 25 ein anteilig innerhalb des Schlitzes 251 plaziertes Verbindungselement 252 auf, das einen nämlichen Schlitz 251 einfassenden, mithin eine Kontur des Schlitzes 251 definierenden Schlitzrand kontaktiert.

Das - beispielsweise sehr biegesteif ausgebildete - Verbindungselement 252 ist an einander gegenüberliegenden, jeweils vom geschlossenen Ende beabstandeten Randbereichen 251', 251" des Schlitzes 251 fixiert, wodurch nämliche einander gegenüberliegende Randbereiche 251', 251" mittels des Verbindungselement 252 unter Bildung einer Fixationszone 25#, innerhalb der Relativbewegungen nämlicher Randbereiche 251', 251" verhindert sind, miteinander mechanisch gekoppelt sind. In Abhängigkeit von einer für das Verbindungselement 252 gewählten, letztlich auch durch den Abstand des Verbindungselement 252 zum geschlossenen Ende des Schlitzes 251 definierten Position, ist eine dem Kopplerelement 25 innewohnende, eine Eigenfrequenz der Rohranordnung mitbestimmende Biegesteifigkeit und damit einhergehend auch nämliche Eigenfrequenz selbst eingestellt. Die Fixationszone 25# kann auf sehr einfache Weise z.B. gebildet sein, indem die einander gegenüberliegende Randbereiche des Schlitzrandes im Verbindungselement eingeklemmt werden bzw. eingeklemmt sind. Die Fixationszone 25# kann zudem dadurch gebildet sein, daß das Verbindungselement 252 an den einander gegenüberliegende Randbereichen 251', 251" des Schlitzrandes wieder lösbar fixiert ist.

Gemäß einer weiteren Ausgestaltung der Erfindung ist das Verbindungselement 252, wie aus der Zusammenschau der Fig. 6 und 7a bzw. 7b ersichtlich, mittels wenigstens einer anteilig im Schlitz 251 plazierte, beispielsweise als Kopfschraube oder als Schraubenbolzen ausgebildete, Schraube 252' mit einem ein Außengewinde aufweisenden Schraubenschaft sowie mittels wenigstens einer, beispielsweise auch selbstsichernden, Mutter 252+ mit einem mit nämlichem Außengewinde in Eingriff stehenden Innengewinde gebildet.

Das Außengewinde der Schraube 252', mithin das Innengewinde der wenigstens einen Mutter 252+ sind hierbei hinsichtlich einer jeweiligen Gewindesteigung in vorteilhafte Weise so ausgebildet, daß im Ergebnis eine selbsthemmende Schraubverbindung gebildet ist. Zwecks Erhöhung der Sicherheit gegen unerwünschtes Selbstlösen der so gebildeten Schraubverbindung kann die wenigstens eine Mutter 252' des Verbindungselements 252 beispielsweise als eine an der den Randbereichen 251', 251" zugewandten Seite Zähne mit asymmetrischen Zahnflanken aufweisende Sperrzahnmutter oder beispielsweise auch als Sicherungsmutter ausgebildet sein. Alternativ oder in Ergänzung kann die wenigstens eine Mutter 252+ des Verbindungselements 252 mittels einer Kontermutter gegen unerwünschtes Selbstlösen gesichert sein.

In einer weiteren Ausgestaltung der Erfindung ist die wenigstens eine Schraube 252' des Verbindungselements als Kopfschraube ausgebildet, nämlich als eine Schraube, die an einem Ende des Schraubenschaftes einen Schraubenkopf 252" aufweist. Wie in der Fig. 7a schematisch dargestellt, kann die Fixationszone 25# unter Verwendung nämlicher Schraube auf sehr einfache Weise dadurch gebildet sein, daß jeder der gegenüberliegenden, schlußendlich die Fixationszone 25# bildenden Randbereiche 251', 251" des Schlitzrandes jeweils zwischen Schraubenkopf und Mutter eingeklemmt ist, beispielsweise jeweils in direktem Kontakt zu Schraubenkopf und Mutter stehend oder aber auch, wie in Fig. 7a schematisch dargestellt, unter Zwischenlage wenigstens einer die Randbereiche entsprechend kontaktierenden Unterlegscheibe. Zwecks Erhöhung der Sicherheit gegen unerwünschtes Selbstlösen der so gebildeten Schraubverbindung kann die Schraube 252' des Verbindungselements beispielsweise auch als eine Sperrzahnschraube ausgebildet sein, die an der den Randbereichen zugewandten Unterseite des Schraubenkopfes Zähne mit asymmetrischen Zahnflanken aufweist.

Ein andere Ausgestaltung des Verbindungselements 252 bzw. der damit gebildeten Fixationszone 25# des Kopplerelements 25 ist in Fig. 7b gezeigt. Hierbei weist das Verbindungselement 252 zusätzlich zur bereist erwähnten Mutter 252+ eine weitere - zweite - Mutter 252# auf, die wie die andere - erste - Mutter 252+ mit einem entsprechenden Innengewinde mit dem Außengewinde auf dem Schraubenschaft der- hier beispielsweise als Schraubenbolzen ausgebildeten - Schraube in Eingriff steht. In diesem Fall ist jeder der gegenüberliegenden Randbereiche 251', 252" des Schlitzrandes innerhalb der Fixationszone jeweils zwischen beiden Muttern eingeklemmt, beispielsweise unter Zwischenlage wenigstens einer die Randbereiche kontaktierenden Unterlegscheibe oder aber auch jeweils in direktem Kontakt zu beiden Muttern 252+, 252# stehend. Im besonderen wird das Verbindungselement 252, sowohl für die in Fig. 7a als auch für den in Fig. 7b gezeigten Ausgestaltung, ferner dadurch fixiert bzw. wird die Fixationszone 25# ferenr jeweils dadurch gebildet, daß nämliche Schraube 252' und nämliche wenigstens eine Mutter 252" relativ zueinander um eine gedachte Schraubenachse solange verdreht werden, bis infolge einer resultierenden Verringerung eines relativen Abstandes zwischen der Mutter und deren jeweiligen Gegenstück, also dem Schraubenkopf bzw. der anderen Mutter, schlußendlich die Randbereiche 251', 252" zusammengepreßt und die Schraube 252' entsprechend gedehnt werden, ggf. auch einhergehend mit geringfügigen plastischen Verformungen der so eingeklemmten Randbereiche 251', 251" des Schlitzes 251.

Die endgültige Position des Verbindungselements 252 innerhalb des Schlitzes 251, mithin auch die Position der so gebildeten Fixationszoe 25# bzw. deren Abstand zum geschlossenen Ende des Schlitzes sind beim erfindungsgemäßen Meßwandler ferner so gewählt, daß im Ergebnis schlußendlich die gewünschte Ziel-Eigenfrequenz der Rohranordnung eingestellt ist. Die Fixationszoe 25# kann z.B. auch gebildet werden, nachdem die Rohranordnung zumindest insoweit hergestellt ist, daß die wenigstens zwei Rohre mittels der wenigstens zwei Kopplerelemente verbunden sind.

Zum Auffinden der zum Einstellen der gewünschten Ziel-Eigenfrequenz für das Verbindungselements 252 tatsächlich erforderlichen Position innerhalb des Schlitzes 251 kann das Verbindungselement 252, nachdem es innerhalb des Schlitzes 251 des an den Rohren 11, 12 fixierten Kopplerelements 25 plaziert worden ist, daselbst beispielsweise vorübergehend in einer Position fixiert werden, die - etwa basierend auf durch zuvor durchgeführte Vergleichsmessungen an typgleichen Rohranordnung bzw. damit gebildeten Meßwandlern erlangten Kenntnissen - ungefähr, ggf. aber noch nicht exakt, der für die schlußendliche einzustellende Ziel-Eigenfrequenz korrespondierenden Position entspricht.. Im Ergebnis dessen kann also die Rohranordnung während des Herstellprozesses somit zunächst eine Interim-Eigenfrequenz, nämlich eine der Rohranordnung lediglich vorläufig innwohnende, von der angestrebten Ziel-Eigenfrequenz nicht tolerierbar abweichende Eigenfrequenz, aufweisen. Nachdem das Verbindungselement 252 entsprechend positioniert und fixiert worden, kann ferner geprüft werden, ob die Rohranordnung bereits auf die vorgegebene Ziel-Eigenfrequenz getrimmt ist bzw. kann ermittelt werden, das momentan lediglich die Interim-Eigenfrequenz eingestellt ist, bzw. inwieweit die vorliegende eingestellte Interim-Eigenfrequenz von der für die Rohranordnung eigentlich angestrebten Ziel-Eigenfrequenz abweicht.

Die so tatsächlich eingestellte Eigenfrequenz der Rohranordnung kann beispielsweise sehr einfach und in guter Nährung dadurch ermittelt werden, daß - z.B. unter Einleitung einer entsprechenden Erregerkraft via Erregeranordnung - zumindest eines der Rohr bzw. die gesamte damit gebildete Rohranordnung auf nämlicher momentaner Eigenfrequenz in einem dieser entsprechenden natürlichen Eigenmode vibrierengelassen und eine Diskrepanz zwischen jener momentanen Eigenfrequenz und der - selbstredend für nämlichen Eigenmode - vorab bestimmten bzw. erwarteten Ziel-Eigenfrequenz anhand einer entsprechenden Frequenzmessung ermittelt werden.

Dementsprechend ist gemäß einer weiteren Ausgestaltung der Erfindung ferner vorgesehen wenigstens eines der Rohre zum Ermitteln der Interim-Eigenfrequenz vibrieren zulassen bzw. nämliche Vibrationen des wenigstens eines der Rohre entsprechend zu erfassen und hinsichtlich der Schwingungsfrequenz auszuwerten. Abgeleitet von der vorgenannten Frequenzmessung kann, etwa unter Ausnutzung der für die Rohranordnung typischerweise hinreichend bekannten funktionalen Abhängigkeit von der Rohranordnung immanenten mechanischen Eigenfrequenzen von der momentanen Biegesteifigkeit des jeweiligen Kopplerelements sowie der Masse und Massenverteilung der Rohranordnung, das für die angestrebte Eigenfrequenz bzw. die dementsprechend angestrebte Biegesteifigkeit des Kopplerelements noch entsprechend abzutragende Teilvolumen ausreichend genau nach Einbau der fertiggestellten Rohranordnung bzw. des nach Herstellung des Innenteils ermittelt werden.

Zum Einleiten von für die Frequenzmessung erforderlichen Erregerkräften via Erregeranordnung 40 zwecks Vibrierenlassens des Rohrs wie auch zum Detektieren daraus resultierender Vibrationen des Rohrs bzw. zwecks Anzeige von gemessen Eigenfrequnezen kann bei fertiggestelltem Innenteil beispielsweise die dem schlußendlich herzustellenden Meßsystem bereits zugewiesene Umformer-Elektronik oder aber auch eine dieser vergleichbare, in der Fertigung verbleibende Test-Elektronik verwendet werden.

Für den nicht gänzlich auszuschließenden Fall, daß eine zu hohe Abweichung der momentan eingestellten Eigenfrequenz von der angestrebten Ziel-Eigenfrequenz, mithin das Einstellen einer Interim-Eigenfrequenz festgestellt wird, kann das Verbindungselement 252 daraufhin zunächst wieder soweit gelöst werden, daß es hernach relativ zum Schlitz 251 bewegbar ist, um anschließend entsprechend, nämlich in einem solchen Bereich des Schlitzes 251, der basierend auf der zuvor durchgeführten Frequenzmessung zur Bildung der die Ziel-Eigenfrequenz einstellenden Fixationszone 25# nunmehr geeignet scheint, neu positioniert und daselbst wieder fixiert zu werden. Ein Vorteil der Erfindung ist somit u.a. auch darin zu sehen, daß vorgenannte Abfolge von Wiederlösen, Neupostionieren und Wiederfixieren des Verbindungselements 252 so oft wiederholt werden kann, bis eine entsprechende - ggf. auch wiederholt durchgeführte - Überprüfung ergibt, daß die momentane eingestellte Eigenfrequenz der für die Rohranordnung vorgegebene Ziel-Eigenfrequenz ausreichend genau entspricht, mithin kann die Ziel-Eigenfrequenz auch iterartiv im "Trial & Error" Verfahren aufgefunden und eingestellt werden.

Ein weiterer Vorteil der Erfindung besteht ferner auch darin, daß, einhergehend mit dem gezielten Einstellen der Ziel-Eigenfrequenz, zudem auch allfällig in der Rohranordnung nach deren Zusammenbau bzw. sogar auch nach deren Einbau in das - zunächst selbstreden noch in ausreichendem Maße zugängliche - Meßwandlergehäuse auftretende Imbalancen, etwa infolge von Exemplarstreuungen der einzelnen Bauteile, auf ein vorgegebenes Toleranzmaß reduziert werden können bzw. auch darin, daß die Rohranordnung bzw. die Biegesteifigkeiten der beiden Kopplerelememte so auch sehr einfach gemäß der eingangs erwähnten internationalen Anmeldung PCT/EP2012/056102 abgestimmt werden können, nämlich derart, daß die Biegesteifigkeit des Kopplerlements 25 um die erwähnte gedachte Längsachse K der Rohranordnung von der korrespondierenden Biegesteifigkeit des Kopplerelements 26 um nämliche Längsachse K abweicht bzw. daß die gedachte Längsachse K der Rohranordnung, wie auch in Fig. 5 schematisch dargestellt, nicht parallel zu den erwähnten Verbindungsachse V₁₁ bzw. V₁₂ ist.

Ferner können, nicht zuletzt für den Fall, daß die Rohranordnugn mittel genau zwei parallelel U-, V-, Rechteck- oder Trapezförmig gekrümmten Rohren gebildet ist, durch geeignete Wahl der Ziel-Eigenfrequenz vorab, einhergehend mit einem entsprechend präzisen Einstellen derselben in der vorbeschriebenen Weise, für die jeweilige Rohranordnung auch die in der eingangs erwähnten US-B 73 50 421, US-B 75 62 585 oder EP-A 1 248 084 erwähnten, im wesentlichen senkrecht zur gedachten Längsachse L wirkenden Querkräfte auf sehr einfache, gleichwohl effektive Weise nennenswert minimiert werden.

Gemäß einer weiteren Ausgestaltung weist, wie in Fig. 5 schematisch dargestellt, auch das zweite Kopplerelement 26 in einem sich zwischen dem ersten und zweiten Rohr 11, 12 erstreckenden Bereich eine wiederum wenigstens ein geschlossenes Ende aufweisenden, beispielsweise zum Schlitz des ersten Kopplerelements 25 identischen, Schlitz 261 sowie ein wiederum anteilig innerhalb nämlichen Schlitzes 261 plaziertes, beispielsweise auch zum Verbindungselement des ersten Kopplerelements baugleiches, Verbindungselement 262 auf, wobei nämliches Verbindungselement wiederum einen den Schlitz des Kopplerelements 26 fassenden Schlitzrand zum Bilden einer entsprechenden Fixationszone des Kopplerelements 26, innerhalb der wiederum Relativbewegungen nämlicher Randbereiche des Schlitzes verhindert sind, kontaktiert. Die beiden Kopplerelemente 25, 26 können hierbei ggf. unterschiedliche Positionen der jeweiligen Fixationszonen bzw. unterschiedlicher Abstände der Verbindungselemente der Kopplerelemente zum jeweiligen geschlossenen Ende des zugehörigen Schlitzes aufweisen, ansonsten aber zueinander baugleich ausgebildet sein. Durch die Bildung einer Fixationszone der in Rede stehenden Art auch innerhalb des zweiten Kopplerelmenets 26 können beispielsweise die erwähnten Querkräfte bzw. Asymmetrien auch weitgehend unabhängig von der mittels der beiden Kopplerelmente 25, 26 einzustellenden Ziel-Eigenfrequenz minimiert werden.

Wenngleich vorangehend die Erfindung lediglich unter Bezugnahme auf ein bzw. zwei Kopplerelement(e) erläutert worden ist, sei an dieser Stelle daraufhingewiesen, daß selbstverständlich, nicht zuletzt auch zwecks einer weiteren Verbesserung der Präzision, mit der beispielsweise die Ziel-Eigenfrequenz eingestellt, und/oder zwecks Schaffung der Möglichkeit, für verschiedene Eigenmoden - etwa dem dem Nutzmode bzw. dem dem Coriolismode entsprechenden - deren jeweiligen Eigenfrequenzen selektiv trimmen zu können, und/oder zwecks einer weiteren Minimierung von senkrecht zur gedachten Längsachse L wirkenden Querkräfte auch an der Rohranordnung allfällig vorgesehene weitere Kopplerelemente der in Rede stehenden Art mittels Schlitzen und damit in der vorbeschriebenen Weise hergestellten Fixationszonen versehen sein können. Darüberhinaus können, falls erforderlich, zusätzlich auch diskrete Zusatzmassen 35, 36 an den Rohren 11, bzw. 12 angebracht sein, die ihrerseits ebenfalls einen Eigenfrequenzen der Rohranordnung, etwa auch modenselektiv, erniedrigenden Beitrag leisten.

## Patentansprüche

1. Meßwandler vom Vibrationstyp zum Erzeugen von mit Parametern eines strömenden Mediums, insb. einer Massendurchflußrate, einer Dichte und/oder einer Viskosität, korrespondierenden Vibrationssignalen (s₁, s₂), welcher Meßwandler umfaßt:
- ein Meßwandlergehäuse mit einem ersten Gehäuseende (100+) und mit einem zweiten Gehäuseende (100#); sowie
- eine sich innerhalb des Meßwandlergehäuse von dessen ersten Gehäuseende bis zu dessen zweiten Gehäuseende erstreckende, mittels wenigstens zweier Rohre gebildete Rohranordnung,
-- von denen zumindest ein erstes Rohr (11) als ein dem Führen von strömendem Medium dienendes Meßrohr ausgebildet ist, und
-- von denen ein zweites Rohr (12) unter Bildung einer einlaßseitigen ersten Kopplungszone (#11, #12) mittels eines ersten Kopplerelements (25) und unter Bildung einer auslaßseitigen zweiten Kopplungszone (11#, 12#) mittels eines zweiten Kopplerelements (26) mit dem ersten Rohr mechanisch verbunden ist;
- wobei das erste Kopplerelement (25) in einem sich zwischen dem ersten und zweiten Rohr erstreckenden Bereich einen wenigstens ein geschlossenes Ende aufweisenden, insb. als ein Langloch oder als ein einseitig offener gerader Längsschlitz ausgebildeten, Schlitz (251) mit einer maximalen Schlitzbreite (B) und einer maximalen Schlitzlänge (L), die größer als die maximalen Schlitzbreite (B) ist, sowie ein anteilig innerhalb des Schlitzes plaziertes Verbindungselement (252) aufweist, das einen nämlichen Schlitz einfassenden Schlitzrand kontaktiert, derart, daß das Verbindungselement einander gegenüberliegende und/oder vom geschlossenen Ende beabstandete Randbereiche (251', 251") des Schlitzrandes unter Bildung einer Fixationszone (25#), innerhalb der Relativbewegungen nämlicher Randbereiche (251', 251") verhindert sind, miteinander mechanisch koppelt, indem das Verbindungselement an nämlichen einander gegenüberliegende Randbereiche (251', 251") fixiert ist.

2. Meßwandler gemäß dem vorherigen Anspruch, wobei die Fixationszone (25#) gebildet ist, indem das Verbindungselement (252) an den einander gegenüberliegende Randbereichen (251', 251") des Schlitzrandes, insb. wiederlösbar, fixiert ist.

3. Meßwandler gemäß einem der vorherigen Ansprüche, wobei die Fixationszone gebildet ist, indem die einander gegenüberliegende Randbereiche des Schlitzrandes im Verbindungselement eingeklemmt sind.

4. Meßwandler gemäß einem der vorherigen Ansprüche, wobei das Verbindungselement wenigstens eine anteilig im Schlitz plazierte, insb. als Kopfschraube oder als Schraubenbolzen ausgebildete, Schraube mit einem ein Außengewinde aufweisenden Schraubenschaft sowie wenigstens eine, insb. jeden der beiden Randbereiche des Schlitzes kontaktierende und/oder selbstsichernde, Mutter mit einem mit nämlichem Außengewinde in Eingriff stehenden Innengewinde umfaßt.

5. Meßwandler gemäß Anspruch 2 und 4,
- wobei die Schraube des Verbindungselements an einem Ende des Schraubenschaftes einen Schraubenkopf aufweist, und
- wobei jeder der gegenüberliegenden Randbereiche des Schlitzrandes innerhalb der Fixationszone jeweils zwischen Schraubenkopf und Mutter eingeklemmt ist, insb. unter Zwischenlage wenigstens einer die Randbereiche kontaktierenden Unterlegscheibe.

6. Meßwandler gemäß Anspruch 4 oder 5, wobei die Schraube des Verbindungselements als Sperrzahnschraube ausgebildet ist.

7. Meßwandler gemäß Anspruch 4,
- wobei das Verbindungselement eine, insb. jeden der beiden Randbereiche des Schlitzes kontaktierende, zweite Mutter mit einem mit dem Außengewinde in Eingriff stehenden Innengewinde umfaßt, und
- wobei jeder der gegenüberliegenden Randbereiche des Schlitzrandes innerhalb der Fixationszone jeweils zwischen beiden Muttern eingeklemmt ist, insb. unter Zwischenlage wenigstens einer die Randbereiche kontaktierenden Unterlegscheibe.

8. Meßwandler gemäß einem der Ansprüche 4 bis 7,
- wobei die wenigstens eine Mutter des Verbindungselements als Sperrzahnmutter ausgebildet ist, oder
- wobei die wenigstens eine Mutter des Verbindungselements als Sicherungsmutter ausgebildet ist.

9. Meßwandler gemäß einem der Ansprüche 4 bis 9, wobei das Verbindungselement weiters wenigstens eine die Mutter sichernde Kontermutter aufweist.

10. Meßwandler gemäß einem der vorherigen Ansprüche,
- wobei das erste Kopplerelement (25) gleichweit vom ersten Gehäuseende des Meßwandlergehäuses entfernt angeordnet ist, wie das zweite Kopplerelement (26) vom zweiten Gehäuseende des Meßwandlergehäuses; und/oder
- wobei das zweite Kopplerelement (26) in einem sich zwischen dem ersten und zweiten Rohr (11, 12) erstreckenden Bereich ein wenigstens ein geschlossenes Ende aufweisenden, insb. als ein Langloch oder als ein einseitig offener gerader Längsschlitz ausgebildeten und/oder zum Schlitz des ersten Kopplerelements (25) identischen, Schlitz (261) sowie ein anteilig innerhalb des Schlitzes, insb. in vom geschlossenen Ende des Schlitzes beabstandet, plaziertes, insb. mittels einer Schraube und wenigstens einer darauf sitzenden Mutter gebildetes und/oder wiederlösbares und/oder zum Verbindungselement (252) des ersten Kopplerelements baugleiches, Verbindungselement (262) umfaßt, das einen nämlichen Schlitz fassenden Schlitzrand kontaktiert, insb. derart, daß das Verbindungselement einander gegenüberliegende Randbereiche des Schlitzrandes unter Bildung einer Fixationszone, innerhalb der Relativbewegungen nämlicher Randbereiche verhindert sind miteinander mechanisch koppelt.

11. Meßwandler gemäß einem der vorherigen Ansprüche, weiters umfassend:
- eine mit der Rohranordnung mechanisch gekoppelte, insb. am ersten und zweiten Rohr angebrachte, elektromechanische Erregeranordnung zum Bewirken von Vibrationen, insb. gegengleichen Biegeschwingungen, der wenigstens zwei Rohre, insb. derart, daß das erste Rohr zumindest anteilig Biegeschwingungen um eine erste gedachte Biegeschwingungsachse der Rohranordnung und das zweite Rohr zumindest anteilig Biegeschwingungen um eine zur ersten gedachten Biegeschwingungsachse parallele zweite gedachte Biegeschwingungsachse der Rohranordnung ausführen; und/oder
- eine Sensoranordnung zum Erfassen von Vibrationen, insb. Biegeschwingungen, wenigstens eines der Rohre und zum Erzeugen wenigstens eines nämliche Vibrationen repräsentierenden Vibrationssignals; und/oder
- einen einlaßseitigen ersten Strömungsteiler (21) mit wenigstens zwei voneinander beabstandeten Strömungsöffnungen (21A, 21B) sowie einen auslaßseitigen zweiten Strömungsteiler (22) mit wenigsten zwei voneinander beabstandeten Strömungsöffnungen (22A, 22B), wobei die wenigstens zwei Rohre unter Bildung einer Rohranordnung mit zumindest zwei strömungstechnisch parallel geschalteten Strömungspfaden an die, insb. baugleichen, Strömungsteiler (21, 22) angeschlossen sind, derart, daß das erste Rohr (11) mit einem einlaßseitigen ersten Rohrende in eine erste Strömungsöffnung (21A) des ersten Strömungsteilers (21) und mit einem auslaßseitigen zweiten Rohrende in eine erste Strömungsöffnung (22A) des zweiten Strömungsteilers (22) und daß das zweite Rohr (12) mit einem einlaßseitigen ersten Rohrende in eine zweite Strömungsöffnung (21B) des ersten Strömungsteilers (21) und mit einem auslaßseitigen zweiten Rohrende in eine zweite Strömungsöffnung (22B) des zweiten Strömungsteilers (22) münden.

12. Meßwandler gemäß einem der vorherigen Ansprüche,
- wobei das erste Rohr parallel zum zweiten Rohr verläuft; und/oder
- wobei das erste Rohr und das zweite Rohr hinsichtlich Form und Material baugleich sind.

13. Meßwandler gemäß einem der vorherigen Ansprüche,
- wobei jedes der Rohre jeweils, insb. U-förmig oder V-förmig, gekrümmt ist; oder
- wobei jedes der Rohre jeweils gerade ist.

14. Meßsystem für ein einer Rohrleitung strömendes Medium, insb. einer wäßrigen Flüssigkeit, einem Schlamm, einer Paste oder einem anderen fließfähigem Material, welches, insb. als Kompakt-Meßgerät und/oder als Coriolis-Massendurchfluß-Meßgerät ausgebildete, Meßsystem einen im Betrieb vom Medium durchströmten einen Meßwandler gemäß einem der vorherigen Ansprüche sowie eine mit dem Meßwandler elektrisch gekoppelte Umformer-Elektronik zum Ansteuern des Meßwandlers und zum Auswerten von vom Meßwandler gelieferten Vibrationssignalen umfaßt.

15. Verfahren zum Einstellen wenigstens einer einer mittels wenigstens zweier, insb. aus Metall bestehenden und/oder als Meßrohr eines Meßwandlers vom Vibrationstyp gemäß einem der vorherigen Ansprüche dienenden, Rohren (11; 12) gebildeten Rohranordnung immanenten Eigenfrequenz, insb. zum Ändern einer nämlicher Rohranordnung lediglich vorläufig innewohnenden Interim-Eigenfrequenz und/oder zum Abgleichen nämlicher Interim-Eigenfrequenz auf eine davon abweichende Ziel-Eigenfrequenz,
-- von welchen wenigstens zwei Rohren zumindest ein erstes Rohr als ein dem Führen von strömendem Medium dienendes Meßrohr ausgebildet ist, und
-- von welchen wenigstens zwei Rohren ein zweites Rohr unter Bildung einer einlaßseitigen ersten Kopplungszone mittels eines, insb. plattenförmigen, ersten Kopplerelements und unter Bildung einer auslaßseitigen zweiten Kopplungszone mittels eines, insb. plattenförmigen, zweiten Kopplerelements mit dem ersten Rohr mechanisch verbunden ist,
- wobei das erste Kopplerelement (25) in einem sich zwischen dem ersten und zweiten Rohr erstreckenden Bereich ein wenigstens ein geschlossenes Ende aufweisenden, insb. als ein Langloch oder als ein einseitig offener gerader Längsschlitz ausgebildeten, Schlitz mit einer maximalen Schlitzbreite (B) und einer maximalen Schlitzlänge (L), die größer als die maximalen Schlitzbreite (B) ist, umfaßt,
welches Verfahren umfaßt:
Fixieren eines anteilig innerhalb des Schlitzes plazierten, insb. mittels einer Schraube und wenigstens einer darauf aufgeschraubten Mutter gebildeten und/oder zunächst innerhalb des Schlitzes verschiebbaren, Verbindungselements, derart,
- daß nämliches Verbindungselement, insb. vom geschlossenen Ende des Schlitzes beabstandet, einen den Schlitz einfassenden Schlitzrand kontaktiert, und
- daß nämliches Verbindungselement einander gegenüberliegende Randbereiche des Schlitzrandes unter Bildung einer Fixationszone, innerhalb der Relativbewegungen nämlicher Randbereiche verhindert sind miteinander mechanisch koppelt, insb. indem die Randbereiche im Verbindungselement eingeklemmt sind.

16. Verfahren nach Anspruch 15, weiters umfassend:
- Ermitteln einer Interim-Eigenfrequenz der Rohranordnung, nämlich einer von einer für die Rohranordnung vorgegebenen bzw. einzustellenden Ziel-Eigenfrequenz abweichenden Eigenfrequenz, insb. nach dem Fixieren des Verbindungselements und/oder basierend auf wenigstens einer bei vibrieren gelassenem Rohr gemessenen mechanischen momentanen Eigenfrequenz der Rohranordnung; und/oder
- Ermitteln, inwieweit die Interim-Eigenfrequenz der Rohranordnung von der für die Rohranordnung vorgegebenen bzw. einzustellenden Ziel-Eigenfrequenz abweicht, insb. basierend auf wenigstens einer bei vibrieren gelassenem Rohr gemessenen mechanischen momentanen Eigenfrequenz der Rohranordnung; und/oder
- Positionieren des Verbindungselements in einem solchen Bereich des Schlitzes, der zur Bildung einer die Ziel-Eigenfrequenz einstellenden Fixationszone geeignet ist; und/oder
- Lösen des Verbindungselements, derart, daß nämliches Verbindungselement hernach relativ zum Schlitz bewegbar ist; und/oder
- Prüfen, ob die Rohranordnung auf eine dafür vorgegebene Ziel-Eigenfrequenz getrimmt ist, insb. basierend auf wenigstens einer bei vibrieren gelassenem Rohr gemessenen momentanen mechanischen Eigenfrequenz der Rohranordnung; und/oder
- Vibrierenlassen wenigstens eines der Rohre zum Ermitteln der Interim-Eigenfrequenz.

17. Verfahren gemäß einem der Ansprüche 15 bis 16, wobei das Verbindungselement wenigstens eine anteilig im Schlitz plazierte, insb. als Kopfschraube oder als Schraubenbolzen ausgebildete, Schraube mit einem ein Außengewinde aufweisenden Schraubenschaft sowie wenigstens eine, insb. jeden der beiden Randbereiche des Schlitzes kontaktierende und/oder wieder lösbare, Mutter mit einem mit nämlichem Außengewinde in Eingriff stehenden Innengewinde umfaßt, bei welchem Verfahren zum Fixieren des Verbindungselements nämliche Schraube und die wenigstens eine Mutter relativ zueinander um eine gedachte Schraubenachse verdreht werden.

18. Verfahren gemäß Anspruch 17,
- wobei die Schraube des Verbindungselements an einem Ende des Schraubenschaftes einen Schraubenkopf aufweist, bei welchem Verfahren zur Bildung der Fixationszone jeder der gegenüberliegenden Randbereiche des Schlitzrandes innerhalb der Fixationszone jeweils zwischen Schraubenkopf und Mutter eingeklemmt wird, oder
- wobei das Verbindungselement wenigstens zwei Muttern, von denen jede ein mit dem Außengewinde des Schraubenschaftes in Eingriff stehenden Innengewinde aufweist, umfaßt, bei welchem Verfahren zur Bildung der Fixationszone jeder der gegenüberliegenden Randbereiche des Schlitzrandes innerhalb der Fixationszone jeweils zwischen beiden Muttern eingeklemmt.

## Claims

1. Vibronic-type transducer for the generation of vibration signals (si, s₂) corresponding to the parameters of a flowing medium, particularly a mass flow, a density and/or a viscosity, said transducer comprising:
- a transducer housing with a first housing end (100+) and with a second housing end (100#); and
- a tube arrangement extending inside the transducer housing from the first housing end to the second housing end, and wherein said tube arrangement is formed by at least two tubes,
-- wherein of said tubes at least a first tube (11) is designed as a measuring tube to guide a flowing medium, and
-- wherein of said tubes a second tube (12) is connected mechanically to the first tube using a first coupling element (25) to form a first coupling zone (#11, #12) on the inlet side and using a second coupling element (26) to form a second coupling zone (11#, 12#) on the outlet side;
- wherein, in an area extending between the first and the second tube, the first coupling element (25) has a slot (251) which has at least one closed end, particularly formed as an elongated hole or as a straight longitudinal slot open at one side, with a maximum slot width (B) and a maximum slot length (L) which is greater than the maximum slot width (B), and a connection element (252) which is located partially inside the slot and which is in contact with a slot edge encompassing said slot in such a way that the connection element mechanically couples peripheral zones (251', 251") of the slot edge, said zones being opposite one another and/or distanced from the closed end, forming a fixation zone (25#), within which relative movements of said peripheral zones (251', 251") are prevented, such that the connection element is fixed on said peripheral zones that are opposite one another (251', 251").

2. Transducer as claimed in the previous claim, wherein the fixation zone (25#) is formed by the fixation of the connection element (252) to the mutually opposing peripheral zones (251', 251") of the slot edge, particularly in a detachable manner.

3. Transducer as claimed in one of the previous claims, wherein the fixation zone is formed by the opposing peripheral zones of the slot edge being clamped in the connection element.

4. Transducer as claimed in one of the previous claims, wherein the connection element comprises at least a screw, partially positioned in the slot, particularly in the form of a screw head or a screw bolt, said screw having a screw shaft with a male thread, as well as at least one nut, particularly contacting and/or self-locking each of the two peripheral zones of the slot, said nut having a female thread engaging with said male thread.

5. Transducer as claimed in Claim 2 and 4,
- wherein the screw of the connection element has a screw head at one end of the screw shaft, and
- wherein each of the opposing peripheral zones of the slot edge is clamped inside the fixation zone between the screw head and the nut, particularly with the interposition of at least one washer in contact with the peripheral zones.

6. Transducer as claimed in Claim 4 or 5, wherein the screw of the connection element is designed as a ratchet screw

7. Transducer as claimed in Claim 4,
- wherein the connection element comprises a second nut, particularly in contact with each of the two peripheral zones of the slot, said nut having a female thread that engages with the male thread, and
- wherein each of the opposing peripheral zones of the slot edge is clamped in the fixation zone between both nuts, particularly with the interposition of the at least one washer which is in contact with the peripheral zones.

8. Transducer as claimed in one of the Claims 4 to 7,
- wherein the at least one nut of the connection element is designed as a ratchet nut, or
- wherein the at least one nut of the connection element is designed as a locking nut.

9. Transducer as claimed in one of the Claims 4 to 9, wherein the connection element further comprises at least one counter-nut locking the nut.

10. Transducer as claimed in one of the previous claims,
- wherein the first coupling element (25) is situated at an equal distance from the first housing end of the transducer housing as the second coupling element (26) is situated from the second housing end of the transducer housing; and/or
- wherein, in an area extending between the first and the second tube (11, 12), the second coupling element (26) comprises a slot (261) which has at least one closed end, particularly formed as an elongated hole or as a straight longitudinal slot open on one side and/or identical to the slot of the first coupling element (25), as well as a connection element (262) partially positioned inside the slot, particularly situated at a distance from the closed end of the slot, particularly formed by a screw and at least one nut located on top of said screw, and/or detachable and/or identical in design to the connection element (252) of the first coupling element, wherein said connection element is in contact with a slot edge surrounding said slot, particularly in such a way that the connection element mechanically couples mutually opposing peripheral zones of the slot edge, forming a fixation zone within which relative movements of said peripheral zones are prevented.

11. Transducer as claimed in one of the previous claims, further comprising:
- an electromechanical exciter arrangement mechanically coupled to the tube arrangement, particularly fixed on the first tube and the second tube, said arrangement being designed to cause vibrations, particularly contrasting flexural vibrations of the at least two tubes, particularly in such a way that the first tube at least partially produces flexural vibrations around a first imaginary flexural vibration axis of the tube arrangement and that the second tube at least partially produces flexural vibrations around a second imaginary flexural vibration axis of the tube arrangement parallel to the first imaginary flexural vibration axis; and/or
- a sensor arrangement designed to measure vibrations, particularly flexural vibrations, of at least one of the tubes and to generate at least a vibration signal representing said vibrations; and/or
- a first flow divider (21) on the inlet side with at least two flow openings (21A, 21B) spaced apart from one another as well as a second flow divider (22) on the outlet side with at least two flow openings (22A, 22B) spaced apart from one another, wherein the at least two tubes are connected to the flow dividers (21, 22), particularly being identical in design, to form a tube arrangement with at least two flow paths connected in parallel in terms of flow, in such a way that the first tube (11) enters into a first flow opening (21A) of the first flow divider (21) with a first tube end on the inlet side and enters into a first flow opening (22A) of the second flow divider (22) with a second tube end on the outlet side, and in such a way that the second tube (12) enters into a second flow opening (21B) of the first flow divider (21) with a first tube end on the inlet side and enters into a second flow opening (22B) of the second flow divider (22) with a second tube end on the outlet side.

12. Transducer as claimed in one of the previous claims,
- wherein the first tube is parallel to the second tube; and/or
- wherein the first tube and the second tube are identical in terms of shape and material.

13. Transducer as claimed in one of the previous claims,
- wherein each of the tubes is curved, particularly in a U-shape or in a V-shape; or
- wherein each of the tubes is straight.

14. Measuring system for a medium flowing through a pipe, particularly an aqueous liquid, a sludge, a paste or another material which can flow, wherein said measuring system, designed particularly as a compact measuring device and/or as a Coriolis mass flowmeter, comprises a transducer as claimed in one of the previous claims, wherein medium flows through said transducer during operation, and a transmitter electronics unit electrically coupled to the transducer and designed to control the transducer and evaluate vibration signals supplied by the transducer.

15. Procedure designed to regulate at least a natural frequency inherent to a tube arrangement formed by at least two tubes (11, 12), particularly tubes made of metal and/or serving as a measuring tube of a vibronic-type transducer as claimed in one of the previous claims, particularly to modify an interim natural frequency which is only temporarily inherent to said tube arrangement and/or to set said interim natural frequency to a target natural frequency which is different to said interim natural frequency,
-- wherein of said at least two tubes, at least a first tube is designed as a measuring tube serving to conduct flowing medium, and
-- wherein of said at least two tubes, a second tube is connected mechanically to the first tube, forming a first coupling zone on the inlet side by means of a first coupling element, particularly plate-like, and forming a second coupling zone on the outlet side by means of a second coupling element, particularly plate-like,
- wherein, in an area extending between the first and the second tube, the first coupling element (25) comprises a slot with at least one closed end, particularly formed as an elongated hole or as a straight longitudinal slot that is open on one side, with a maximum slot width (B) and a maximum slot length (L) that is greater than the maximum slot width (B),
said procedure comprising:
fixation of a connection element partially positioned in the slot, particularly formed by a screw and at least a nut screwed onto said screw and/or initially adjustable in the slot, in such a way that
- said connection element, particularly situated at a distance from the closed end of the slot, is in contact with a slot edge surrounding the slot, and
- said connection element mechanically couples the mutually opposing peripheral zones of the slot edge, forming a fixation zone within which relative movements of said peripheral zones are prevented, particularly in that the peripheral zones are clamped in the connection element.

16. Procedure as claimed in Claim 15, further comprising the following steps:
- Determination of an interim natural frequency of the tube arrangement, specifically a natural frequency that deviates from a target natural frequency predefined or to be set for the tube arrangement, particularly after the fixation of the connection element and/or based on at least a current mechanical natural frequency of the tube arrangement that is measured while the tube is vibrating; and/or
- Determination of the extent to which the interim natural frequency of the tube arrangement deviates from the target natural frequency predefined or to be set for the tube arrangement, particularly based on the at least a current mechanical natural frequency of the tube arrangement that is measured while the tube is vibrating; and/or
- Positioning of the connection element in such an area of the slot that is suitable to form a fixation zone that sets the target natural frequency; and/or
- Release of the connection element in such a way that said connection element can subsequently be moved relative to the slot; and/or
- Verification of whether the tube arrangement is trimmed to a target natural frequency predefined for said purpose, particularly on the basis of at least a current mechanical natural frequency of the tube arrangement that is measured while the tube is vibrating; and/or
- At least one of the tubes is allowed to vibrate to determine the interim natural frequency.

17. Procedure as claimed in one of the Claims 15 to 16, wherein the connection element comprises at least a screw - which is partially positioned in the slot, and particularly formed as a head screw or as a screw bolt - with a screw shaft having a male thread, as well as at least one nut - particularly a detachable nut or a nut that is in contact with each of the two peripheral zones of the slot - with a female thread that engages with said male thread, wherein in said procedure to fix the connection element, the screw and the at least one nut are twisted around an imaginary screw axis in relation to one another.

18. Procedure as claimed in Claim 17,
- wherein the screw of the connection element has a screw head at one end of the screw shaft, wherein in said procedure to form the fixation zone, each of the opposing peripheral zones of the slot edge within the fixation zone are clamped, respectively, between the screw head and the nut, or
- wherein the connection element comprises at least two nuts, each having a female thread that engages with the male thread of the screw shaft, wherein in said procedure to form the fixation zone each of the opposing peripheral zones of the slot edge within the fixation zone are clamped, respectively, between the two nuts.

## Revendications

1. Transducteur du type à vibrations destiné à la génération de signaux de vibration (si, s₂) correspondant aux paramètres d'un produit en écoulement, notamment un débit massique, une densité et/ou une viscosité, lequel transducteur comprend :
- un boîtier de transducteur avec une première extrémité de boîtier (100+) et avec une deuxième extrémité de boîtier (100#) ; ainsi que
- un agencement de tubes s'étendant à l'intérieur du boîtier de transducteur, de sa première extrémité de boîtier à sa seconde extrémité de boîtier, et lequel agencement de tubes est formé au moyen d'au moins deux tubes,
-- tubes parmi lesquels au moins un premier tube (11) est conçu comme un tube de mesure servant à guider un produit en écoulement, et
-- tubes parmi lesquels un deuxième tube (12) est relié mécaniquement au premier tube au moyen d'un premier élément de couplage (25) pour former une première zone de couplage (#11, #12) côté entrée et au moyen d'un deuxième élément de couplage (26) pour former une deuxième zone de couplage (11#, 12#) côté sortie ;
- le premier élément de couplage (25) comportant, dans une zone s'étendant entre le premier et le deuxième tube, une fente (251) présentant au moins une extrémité fermée, notamment formée en tant que trou oblong ou en tant que fente longitudinale droite ouverte d'un côté, avec une largeur de fente maximale (B) et une longueur de fente maximale (L) qui est supérieure à la largeur de fente maximale (B), ainsi qu'un élément de liaison (252) qui est placé partiellement à l'intérieur de la fente et qui est en contact avec un bord de fente entourant ladite fente, de telle sorte que l'élément de liaison couple mécaniquement des zones périphériques (251', 251") du bord de fente, lesquelles se font face et/ou sont espacées de l'extrémité fermée, en formant une zone de fixation (25#) à l'intérieur de laquelle les mouvements relatifs desdites zones périphériques (251', 251") sont empêchés par la fixation de l'élément de liaison auxdites zones périphériques opposées (251', 251").

2. Transducteur selon la revendication précédente, pour lequel la zone de fixation (25#) est formée par la fixation de l'élément de liaison (252) aux zones périphériques opposées (251', 251") du bord de fente, notamment d'une manière détachable.

3. Transducteur selon l'une des revendications précédentes, pour lequel la zone de fixation est formée en serrant les zones périphériques opposées du bord de fente dans l'élément de liaison.

4. Transducteur selon l'une des revendications précédentes, pour lequel l'élément de liaison comprend au moins une vis, placée partiellement dans la fente, notamment sous la forme d'une vis à tête ou d'un boulon fileté, laquelle vis présente une tige de vis avec un filetage extérieur, ainsi qu'au moins un écrou, en contact et/ou autobloquant, notamment dans chacune des deux zones périphériques de la fente, lequel écrou présente un filetage intérieur qui s'engage dans ledit filetage extérieur.

5. Transducteur selon la revendication 2 et 4,
- pour lequel la vis de l'élément de liaison présente une tête de vis à une extrémité de la tige de vis, et
- pour lequel chacune des zones périphériques opposées du bord de fente est serrée à l'intérieur de la zone de fixation entre la tête de vis et l'écrou, notamment avec l'interposition d'au moins une rondelle en contact avec les zones périphériques.

6. Transducteur selon la revendication 4 ou 5, pour lequel la vis de l'élément de liaison est conçue comme une vis à denture indesserrable

7. Transducteur selon la revendication 4,
- pour lequel l'élément de liaison comprend un deuxième écrou, notamment en contact avec chacune des deux zones périphériques de la fente, lequel écrou présente un filetage interne s'engageant dans le filetage externe, et
- pour lequel chacune des zones périphériques opposées du bord de fente est serrée à l'intérieur de la zone de fixation entre les deux écrous, notamment avec l'interposition d'au moins une rondelle en contact avec les zones périphériques.

8. Transducteur selon l'une des revendications 4 à 7,
- pour lequel l'au moins un écrou de l'élément de liaison est conçu comme un écrou à denture indesserrable, ou
- pour lequel l'au moins un écrou de l'élément de liaison est conçu comme un écrou frein.

9. Transducteur selon l'une des revendications 4 à 9, pour lequel l'élément de liaison comprend en outre au moins un contre-écrou freinant l'écrou.

10. Transducteur selon l'une des revendications précédentes,
- pour lequel le premier élément de couplage (25) est situé à égale distance de la première extrémité de boîtier du transducteur, tout comme le deuxième élément de couplage (26) est situé à égale distance de la deuxième extrémité de boîtier du transducteur ; et/ou
- pour lequel le deuxième élément de couplage (26) comprend, dans une zone s'étendant entre le premier et le deuxième tube (11, 12), une fente (261) présentant au moins une extrémité fermée, notamment formée comme un trou oblong ou comme une fente longitudinale droite ouverte sur un côté et/ou identique à la fente du premier élément de couplage (25), ainsi qu'un élément de liaison (262) placé partiellement à l'intérieur de la fente, notamment situé à distance de l'extrémité fermée de la fente, notamment formé au moyen d'une vis et d'au moins un écrou placé sur celle-ci, et/ou détachable et/ou identique dans sa construction à l'élément de liaison (252) du premier élément de couplage, lequel élément de liaison est en contact avec un bord de fente entourant la même fente, notamment de telle sorte que l'élément de liaison couple mécaniquement des zones périphériques mutuellement opposées du bord de fente, en formant une zone de fixation à l'intérieur de laquelle des mouvements relatifs desdites zones périphériques sont empêchés.

11. Transducteur selon l'une des revendications précédentes, comprenant en outre :
- un circuit d'excitation électromécanique couplé mécaniquement à l'agencement de tubes, notamment fixé au premier tube et au deuxième tube, lequel circuit est destiné à provoquer des vibrations, notamment des vibrations de flexion diamétralement opposées des au moins deux tubes, notamment de telle sorte que le premier tube exécute au moins partiellement des vibrations de flexion autour d'un premier axe de vibration de flexion imaginaire de l'agencement de tube et que le deuxième tube exécute au moins partiellement des vibrations de flexion autour d'un axe de vibration de flexion imaginaire de l'agencement de tubes parallèle au premier axe de vibration de flexion imaginaire ; et/ou
- un agencement de capteurs destiné à mesurer les vibrations, notamment les vibrations de flexion, d'au moins l'un des tubes et destiné à générer au moins un signal de vibration représentant lesdites vibrations ; et/ou
- un premier diviseur de débit (21) côté entrée avec au moins deux ouvertures d'écoulement (21A, 21B) espacées l'une de l'autre, ainsi qu'un deuxième diviseur de débit (22) côté sortie avec au moins deux ouvertures d'écoulement (22A, 22B) espacées l'une de l'autre, les au moins deux tubes étant raccordés aux diviseurs de débit (21, 22), notamment de construction identique, pour former un agencement de tubes avec au moins deux chemins d'écoulement connectés en parallèle en termes d'écoulement, de telle sorte que le premier tube (11) débouche avec une première extrémité de tube côté entrée dans une première ouverture d'écoulement (21A) du premier diviseur de débit (21) et avec une deuxième extrémité de tube côté sortie dans une première ouverture d'écoulement (22A) du deuxième diviseur de débit (22), et de telle sorte que le deuxième tube (12) débouche avec une première extrémité de tube côté entrée dans une deuxième ouverture d'écoulement (21B) du premier diviseur de débit (21) et avec une deuxième extrémité de tube côté sortie dans une deuxième ouverture d'écoulement (22B) du deuxième diviseur de débit (22).

12. Transducteur selon l'une des revendications précédentes,
- pour lequel le premier tube est parallèle au deuxième tube ; et/ou
- pour lequel le premier tube et le deuxième tube sont de forme et de matériau identiques.

13. Transducteur selon l'une des revendications précédentes,
- pour lequel chacun des tubes est respectivement incurvé, notamment en forme de U ou en forme de V ; ou
- pour lequel chacun des tubes est respectivement droit.

14. Système de mesure destiné à la mesure d'un produit s'écoulant dans une conduite, notamment un liquide aqueux, une boue, une pâte ou une autre matière fluide, lequel système de mesure, conçu notamment comme un appareil de mesure compact et/ou comme un débitmètre massique Coriolis, comprend un transducteur selon l'une des revendications précédentes, lequel transducteur est traversé par le produit pendant le fonctionnement, ainsi qu'une électronique de transmetteur couplée électriquement au transducteur et destinée à la commande du transducteur et à l'évaluation des signaux de vibration fournis par le transducteur.

15. Procédé destiné au réglage d'au moins une fréquence propre immanente à un agencement de tubes formé d'au moins deux tubes (11, 12), notamment métalliques et/ou servant de tube de mesure d'un transducteur du type à vibrations selon l'une des revendications précédentes, notamment pour modifier une fréquence propre temporaire, inhérente seulement temporairement audit agencement de tubes et/ou pour régler cette fréquence propre temporaire à une fréquence propre cible qui en diffère,
-- parmi les aux moins deux tubes, au moins un premier tube étant conçu comme un tube de mesure servant à guider un produit en écoulement, et
-- parmi les aux moins deux tubes, un deuxième tube étant relié mécaniquement au premier tube, en formant une première zone de couplage côté entrée au moyen d'un premier élément de couplage, notamment en forme de plaque, et en formant une deuxième zone de couplage côté sortie au moyen d'un deuxième élément de couplage, notamment en forme de plaque,
- le premier élément de couplage (25) comprenant, dans une zone s'étendant entre le premier et le deuxième tube, une fente présentant au moins une extrémité fermée, notamment formée comme un trou allongé ou comme une fente longitudinale droite ouverte sur un côté, avec une largeur de fente maximale (B) et une longueur de fente maximale (L) qui est supérieure à la largeur de fente maximale (B),
lequel procédé comprend :
Fixation d'un élément de liaison placé partiellement dans la fente, notamment formé par une vis et au moins un écrou vissé sur celle-ci et/ou dans un premier temps déplaçable dans la fente, de telle sorte
- que ledit élément de liaison, notamment situé à distance de l'extrémité fermée de la fente, est en contact avec un bord de fente entourant la fente, et
- que ledit élément de liaison couple mécaniquement des zones périphériques mutuellement opposées du bord de fente, formant ainsi une zone de fixation à l'intérieur de laquelle les mouvements relatifs desdites zones périphériques sont empêchés, notamment en ce que les zones périphériques sont serrées dans l'élément de liaison.

16. Procédé selon la revendication 15, comprenant en outre les étapes suivantes :
- Détermination d'une fréquence propre temporaire de l'agencement de tubes, à savoir une fréquence propre s'écartant d'une fréquence propre cible prédéfinie ou à régler pour l'agencement de tubes, notamment après la fixation de l'élément de liaison et/ou sur la base d'au moins une fréquence propre mécanique instantanée de l'agencement de tubes mesurée lorsque le tube est laissé en vibration; et/ou
- Détermination dans quelle mesure la fréquence propre temporaire de l'agencement de tubes s'écarte de la fréquence propre cible prédéfinie ou à régler pour l'agencement de tubes, notamment sur la base d'au moins une fréquence propre mécanique instantanée de l'agencement de tubes mesurée lorsque le tube est laissé en vibration ; et/ou
- Positionnement de l'élément de liaison dans une zone de la fente qui est appropriée pour former une zone de fixation fixant la fréquence propre cible ; et/ou
- Desserrage de l'élément de liaison de telle sorte que ledit élément de liaison soit ensuite mobile par rapport à la fente ; et/ou
- Vérification si l'agencement de tubes est ajusté à une fréquence propre cible prédéfinie à cette fin, notamment sur la base d'au moins une fréquence propre mécanique instantanée de l'agencement de tubes mesurée lorsque le tube est laissé en vibration ; et/ou
- Mise en vibration d'au moins un des tubes pour déterminer la fréquence propre temporaire.

17. Procédé selon l'une des revendications 15 à 16, pour lequel l'élément de liaison comprend au moins une vis - laquelle est placée partiellement dans la fente, notamment formée comme une vis à tête ou comme un boulon fileté - avec une tige de vis présentant un filetage extérieur, ainsi qu'au moins un écrou - notamment entrant en contact et/ou pouvant être libéré de chacune des deux zones périphériques de la fente - avec un filetage intérieur s'engageant notamment avec ledit filetage extérieur, procédé pour lequel, pour fixer l'élément de liaison, la vis et l'au moins un écrou sont tournés l'un par rapport à l'autre autour d'un axe de vis imaginaire.

18. Procédé selon la revendication 17,
- pour lequel la vis de l'élément de liaison présente une tête de vis à une extrémité de la tige de vis, procédé pour lequel, en vue de former la zone de fixation, chacune des zones périphériques opposées du bord fendu à l'intérieur de la zone de fixation est serrée entre la tête de vis et l'écrou, respectivement, ou
- pour lequel l'élément de liaison comprend au moins deux écrous ayant chacun un filetage interne engagé avec le filetage externe de la tige de vis, procédé pour lequel chacune des zones périphériques opposées du bord de la fente à l'intérieur de la zone de fixation est serrée respectivement entre les deux écrous pour former la zone de fixation.
